(19) Europäisches Patentamt
European Patent Office
Office européen des brevets

(11) Veröffentlichungsnummer: **0 241 414 B1**

# (12) EUROPÄISCHE PATENTSCHRIFT

(45) Veröffentlichungstag der Patentschrift: **08.05.91**

(51) Int. Cl.$^5$: **C09B 45/01**, D06P 1/10

(21) Anmeldenummer: **87810143.5**

(22) Anmeldetag: **12.03.87**

Die Akte enthält technische Angaben, die nach dem Eingang der Anmeldung eingereicht wurden und die nicht in dieser Patentschrift enthalten sind.

## (54) Verfahren zur Herstellung von 1:2-Metallkomplexazofarbstoffen.

(30) Priorität: **18.03.86 CH 1087/86**
**30.07.86 CH 3061/86**

(43) Veröffentlichungstag der Anmeldung:
**14.10.87 Patentblatt 87/42**

(45) Bekanntmachung des Hinweises auf die Patenterteilung:
**08.05.91 Patentblatt 91/19**

(84) Benannte Vertragsstaaten:
**BE CH DE ES FR GB LI**

(56) Entgegenhaltungen:
**EP-A- 0 019 152**
**EP-A- 0 088 271**
**DE-C- 350 697**
**US-A- 1 480 640**

(73) Patentinhaber: **CIBA-GEIGY AG**
**Klybeckstrasse 141**
**CH-4002 Basel(CH)**

(72) Erfinder: **Chambon, Bernard**
**2 rue St. Justin**
**F-68220 Michelbach Le Haut(FR)**
Erfinder: **Jäger, Horst Heinrich, Dr.**
**Wyhlenweg 10**
**CH-4126 Bettingen(CH)**
Erfinder: **Oxenius, Rüdiger, Dr.**
**Brunnenweg 15**
**W-7888 Rheinfelden(DE)**
Erfinder: **Püntener, Alois, Dr.**
**Pulverweg 13**
**CH-4310 Rheinfelden(CH)**

EP 0 241 414 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Verfahren zur Herstellung von symmetrischen oder gemischten 1:2-Metallkomplexazofarbstoffen durch Diazotierung, Kupplung und Metallisierung ohne Zwischenisolierung des Kupplungsproduktes, in dem die Diazotierung oder die Kupplung in Gegenwart einer metallabgebenden Verbindung erfolgt.

Das bisher übliche Herstellungsverfahren für symmetrische 1:2-Metallkomplexazofarbstoffe, die pro Metallatom zwei identische Azoliganden enthalten, oder gemischt 1:2-Metallkomplexazofarbstoffe, die aus mindestens zwei symmetrischen und mindestens einem asymmetrischen Komplex bestehen, kann z.B. durch folgende Schritte charakteristiert werden:

- Diazotierung eines Amins, welches eine zur Komplexbildung geeignete Gruppe enthält, bei tiefer Temperatur;
- Kupplung auf eine Kupplungskomponente, welche eine zur Komplexbildung geeignete Gruppe enthält, bei zumeist tiefer Temperatur;
- Isolierung des Kupplungsproduktes durch Aussalzen und Filtration;
- Lösen oder Suspendieren des Kupplungsproduktes;
- Metallisierung des Kupplungsproduktes; und
- Isolierung des 1:2-Metallkomplexazofarbstoffes.

Nachteil dieser Verfahrensweise sind z.B. die folgenden zeit- und materialaufwendigen Schritte:

- Isolierung des Kupplungsproduktes z.B. durch Aussalzen und Abfiltration;
- Erneutes Lösen des Kupplungsproduktes gegebenenfalls unter Erwärmen für die Metallisierungsstufe.

Bekannt sind ferner Herstellungsverfahren für symmetrische oder gemischte 1:2-Metallkomplexazofarbstoffe ohne Zwischenisolierung des Kupplungsproduktes, indem man die Kupplungsreaktion und die Metallisierung in organischen Lösungsmitteln insbesondere wasserhaltigen, organischen mit Wasser mischbaren Lösungsmitteln durchführt.

Nachteil dieser Verfahrensweise ist die notwendige Abscheidung des organischen Lösungsmittels bzw. die aufwendige Trennoperation von Farbstoff, Wasser und organischem Lösungsmittel.

Nachteil dieser bekannten Verfahrensweise ist ferner die grössere Abwasserbelastung gegenüber der rein wässrigen Verfahrensweise.

Ueberraschenderweise wurde nun ein neues Verfahren gefunden, welches die genannten Nachteile nicht aufweist und welches erlaubt, auf einfache Art und Weise 1:2-Metallkomplexazofarbstoffe herzustellen.

Gegenstand der vorliegenden Erfindung ist somit ein Verfahren zur Herstellung von 1:2-Chrom-, 1:2-Kobalt-, 1:2-Nickel- oder 1:2-Eisenkomplexazo-farbstoffen durch Diazotierung, Kupplung und Metallisierung ohne Zwischen-isolierung des Kupplungsproduktes, welches dadurch gekennzeichnet ist, dass man in wässriger Lösung ohne Zusatz eines organischen Lösungsmittels mindestens ein Amin der Benzol- oder Naphthalinreihe diazotiert und auf mindestens eine Kupplungskomponente der Benzol- oder Naphthalinreihe oder der heterocyclischen Reihe kuppelt, wobei der intermediär gebildete Azofarbstoff zur Komplexierung geeignete Gruppen enthält, wobei die Diazotierung oder die Kupplung in Gegenwart einer das Chrom-, Kobalt-, Nickel- oder Eisenatom abgebenden Verbindung erfolgt und wobei man die Summe der Kupplungskomponenten bzw. die Summe der Diazokomponente zum Metallisierungsmittel im molaren Verhältnis von 1,2:1,0 bis 2,4:1,0 verwendet.

Bei der erfindungsgemässen Verfahrensweise kann man überraschenderweise

- auf die aufwendige Zwischenisolierung des Kupplungsproduktes verzichten;
- Diazotierung, Kupplung und Metallisierung als Eintopfverfahren durchführen;
- die Reaktionszeit verkürzen durch höhere Kupplungstemperatur und sofort mögliche Metallisierung;
- Umsetzungen in konzentrierter Lösung durchführen.

Gemäss der erfindungsgemässen Verfahrensweise können auch empfindliche Azoverbindungen in guter Ausbeute und Reinheit erhalten werden, da die gebildete Azoverbindung sofort nach erfolgter Kupplung durch intermediäre Komplexierung mit dem in der Reaktionsmasse vorhandenen Metall auch im sauren pH-Bereich stabilisiert werden kann.

In dem erfindungsgemässen Verfahren erfolgt die Diazotierung oder Kupplung in Gegenwart einer das Chrom-, Kobalt-, Nickel- oder Eisenatom abgebenden Verbindung. Bei der Diazotierung in Gegenwart der metallabgebenden Verbindung ist die metallabgebende Verbindung Bestandteil der Diazoniumsalz-Lösung und damit bei der Diazotierung und der Kupplung anwesend, während Kupplung in Gegenwart der metallabgebenden Verbindung bedeutet, dass die metallabgebende Verbindung Bestandteil der Lösung der Kupplungskomponente ist.

Eine bevorzugte Ausführungsform des erfindungsgemässen Verfahrens ist dadurch gekennzeichnet, dass man in wässriger Lösung mindestens ein Amin der Benzol- oder Naphthalinreihe, welches eine zur

Komplexbildung geeignete Gruppe enthält, diazotiert und auf mindestens eine Kupplungskomponente der Benzol- oder Naphthalinreihe oder der heterocyclischen Reihe, welche eine zur Komplexbildung geeignete Gruppe enthält, kuppelt, wobei die Diazotierung oder die Kupplung in Gegenwart einer das Chrom-, Kobalt-, Nickel- oder Eisenatom abgebenden Verbindung erfolgt.

Eine ebenfalls bevorzugte Ausführungsform das erfindungsgemässen Verfahren ist dadurch gekennzeichnet, dass die Diazotierung oder die Kupplung in Gegenwart einer das Chrom-, Kobalt- oder Nickelatom abgebenden Verbindung erfolgt.

Eine weitere bevorzugte Ausführungsform des erfindungsgemässen Verfahrens ist dadurch gekennzeichnet, dass die wässrige Lösung der Kupplungskomponente das Chrom-, Kobalt-, Nickel- oder Eisenatomabgebende Verbindung enthält.

Insbesondere verwendet man in dem erfindungsgemässen Verfahren eine das Chrom- oder Kobaltatom abgebende Verbindung.

Die Kupplung mindestens eines Diazoniumsalzes auf mindestens eine Kupplungskomponente erfolgt in der Regel bei Temperaturen oberhalb von 0 °C, z.b. 0 bis 100 °C. Vorteilhaft erfolgt die Kupplung bei einer Temperatur von 40 bis 100 °C, vorzugsweise 55 bis 85 °C und insbesondere 70 bis 80 °C. Die Aufangstemperatur der Kupplung beträgt 0 bis 100 °C, bevorzugt 40 bis 60 °C.

Da die Kupplung sowohl im sauren wie im alkalischen pH-Bereich ausgeführt werden kann, kann der pH-Wert in einem grossen Bereich schwanken. Im allgemeinen hat sich eine pH-Bereich von 0,5 bis 11 als vorteilhaft erwiesen.

Die Metallisierung erfolgt in der Regel bei einer Temperatur von 40 bis 160 °C, vorzugsweise 60 bis 120 °C und insbesondere 75 bis 100 °C, wobei bei einer Temperatur oberhalb von 100 °C in einem geschlossenen Gefäss unter Druck (Ueberdruck) gearbeitet wird, wobei sich ein Druck von 1 bis 6 bar insbesondere 2 bis 4 bar als vorteilhaft erwiesen hat.

Die Metallisierung erfolgt im allgemeinen in einem pH-Bereich von 2 bis 12.

Das erfindungsgemässe Verfahren wird in wässriger Lösung ohne Zusatz eines organischen Lösungsmittels ausgeführt. Die wässrige Lösung kann gegebenenfalls ausser den zur Diazotierung und Metallisierung notwendigen Verbindungen, wie z.B. Natriumnitrit und Kobaltsulfat, Eisen(III)chlorid, Natriumchromsalicylat oder Nickelsulfat, noch weitere Salze, wie z.B. Alkali- oder Erdalkalisalze wie $Na_2SO_4$, $MgCl_2$ oder NaCl, oder die Salze von Carbonsäuren, wie Natriumacetat, -tartrat, -salicylat, die direkt als Salze oder auch als freie Säure, welche bei der Metallisierung teilweise oder ganz neutralisiert wird, und die Lösung oder Suspension beeinflussende Mittel wie z.B. Entschäumungsmittel enthalten.

Die Diazotierung mindestens eines Amins erfolgt nach an sich bekannter Verfahrensweise, indem das Amin mit einem Diazotierungsmittel, wie z.B. Natriumnitrit, in saurer Lösung z.B. bei pH 0,1 bis 2, bei einer Temperatur von -10 °C bis +70 °C gegebenenfalls adiabatisch in das Diazoniumsalz überführt wird.

Die in dem erfindungsgemässen Verfahren eingesetzten Amine und Kupplungskomponenten enthalten zur Komplexbildung geeignete Gruppen in der Weise, dass entweder die Diazokomponente oder insbesondere die Kupplungskomponente zwei zur Komplexbildung geeignete Gruppen enthalten, wobei z.B. eine Gruppe eine kovalente Bindung ausbilden kann und die andere Gruppe eine koordinative Bindung ausbilden kann, oder dass sowohl die Diazokomponente wie die Kupplungskomponente je eine zur Komplexbildung geeignete Gruppe, wobei im allgemeinen kovalente Bindungen ausgebildet werden, enthalten.

Die in dem erfindungsgemässen Verfahren eingesetzten Amine, die durch eine zur Komplexbildung geeignete Gruppe substituiert sind, enthalten diese Gruppe vorzugsweise in o-Stellung zu der Aminogruppe und die verwendeten Kupplungskomponenten, die durch eine zur Komplexbildung geeignete Gruppe substituiert sind, enthalten diese Gruppe vorzugsweise in Nachbarstellung zu der Kupplungsstelle.

Zur Komplexbildung kommen z.B. folgende Gruppen in Betracht: die Hydroxy-, Carboxy-, Methoxy- oder Aminogruppe sowie gegebenenfalls durch Hydroxy, $C_1$-$C_4$-Alkoxy oder Halogen substituiertes Mono-$C_1$-$C_4$-Alkylamino oder Phenylamino.

Weitere zur Komplexbildung geeignete Gruppen sind solche die eine koordinative Bindung ausbilden können. Beispielsweise handelt es sich um Heteroatome in einem heterocyclischen aromatischen Ring, wie z.B. das Stickstoffen im Chinolin.

Die in den erfindungsgemässen Verfahren verwendbaren Amine der Benzol- oder Naphthalinreihe können die in Azofarbstoffen üblichen Substituenten enthalten.

Als Beispiele für derartige Substituenten seien genannt:

$C_{1-4}$-Alkyl, wie Methyl, Aethyl, Propyl, Isopropyl, n-Butyl, sek.-Butyl, Isobutyl, tert-Butyl, $C_{1-4}$-Alkoxy, wie Methoxy, Aethoxy, Propoxy, Isopropoxy, n-Butyoxy, sek.-Butoxy, Isobutoxy, tert.-Butoxy, Halogen, wie Fluor, Chlor oder Brom, Nitro, Cyan, Trifluormethyl, $-SO_2NH_2$, N-$C_{1-4}$-Alkylsulfamoyl, wie N-Methylsulfamoyl, N-$C_{1-4}$-Alkoxy-$C_{1-4}$-alkylsulfamoyl, wie N-($\beta$-Methoxyäthyl)-sulfamoyl, Phenylaminosulfonyl, Carboxyphenylaminosulfonyl, $C_{1-4}$-Alkylsulfonyl, wie Methylsulfonyl, $C_{2-5}$-Alkanoylamino, wie Acetylamino, Propio-

nylamino, Benzoylamino, Benzylsulfon, $C_{1-4}$-Hydroxyalkylsulfonyl, N-$C_{1-4}$-Hydroxyalkylsulfamoyl, Sulfo.

Bevorzugt werden Amine verwendet, die eine zur Komplexbildung geeignete Gruppe in o-Stellung zur Aminogruppe enthalten.

Als Amine kommen z.B. in Betracht:

2-Amino-1-hydroxybenzol, 2-Amino-1-methoxybenzol, Anthranilsäure, 4-oder 5-Sulfonamido-anthranilsäure, 3- oder 5-Chloranthranilsäure, 4-Chlor- und 4,6-Dichlor-2-amino-1-hydroxybenzol, 4- oder 5- oder 6-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5-methyl-und 5-benzylsulfon, 2-Amino-1-hydroxybenzol-4-methyl-, -äthyl-, -chlormethyl- und butylsulfon, 6-Chlor-, 5-Nitro- und 6-Nitro-2-amino-1-hydroxybenzol-4-methylsulfon, 2-Amino-1-hydroxybenzol-4-oder -5-sulfamid, -sulf-N-methyl- und -sulf-N-β-hydroxyäthylamid,2-Amino-1-methoxybenzol-4-sulfanilid, 4-Methoxy-5-chlor-2-amino-1-hydroxybenzol, 4-Methyl-2-amino-1-hydroxybenzol, 4-Chlor-5-nitro-2-amino-1-hydroxybenzol, 5-Nitro-4-methyl-2-amino-1-hydroxybenzol, 5-Nitro-4-methoxy-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 4-Nitro-2-amino-1-hydroxybenzol-5-oder -6-sulfonsäureamid, 4- oder 5-Chloranisidin, 4- oder 5-Nitro-anisidin, 2-Methoxy-5-methylanilin, 2,5-Dimethoxyanilin, 2-Anisidin-4- oder -5-β-hydroxyäthylsulfon, 4-Methyl-6-sulfo-2-amino-1-hydroxybenzol, 2-Amino-4-sulfo-1-hydroxybenzol, 4-Chlor-6-sulfo-2-amino-1-hydroxybenzol, 6-Chlor-4-sulfo-2-amino-1-hydroxybenzol, 5-Nitro-4-sulfo-2-amino-1-hydroxybenzol, 4-Nitro-6-sulfo-2-amino-1-hydroxybenzol, 6-Nitro-4-sulfo-2-amino-1-hydroxybenzol, 2-Aminobenzoesäure, 2-Amino-5-sulfobenzoesäure, 4-Acetylamino-2-amino-1-hydroxybenzol, 4-Acetylamino-6-sulfo-2-amino-1-hydroxybenzol, 5-Acetylamino-2-amino-1-hydroxybenzol, 6-Acetylamino-4-sulfo-2-amino-1-hydroxybenzol, 4-Chlor-2-amino-1-hydroxybenzol-5-sulfamid, 2-Amino-1-hydroxybenzol-4-(N-2′-Carboxyphenyl)-sulfamid, 1-Amino-2-hydroxy-5-sulfonaphthalin, 1-Amino-2-hydroxy-4-sulfo-6-nitronaphthalin, 1-Amino-2-hydroxy-4-sulfo-6-acetamidonaphthalin, 1-Amino-2-hydroxy-4,8-disulfonaphthalin, 1-Amino-2-hydroxy-6-sulfonaphthalin,1-Amino-2-hydroxy-7-sulfonaphthalin, 1-Amino-2-hydroxy-8-sulfonaphthalin, 2-Amino-1-hydroxy-4-sulfonaphthalin, 2-Amino-1-hydroxy-6-sulfonaphthalin, 2-Amino-1-hydroxy-6-sulfo-4-nitrobenzol.

Weite Amine, die keine zur Komplexbildung geeignete Gruppe enthalten, sind z.B.:

2-Amino-1,1′-diphenylsulfon, 2-Amino-4-chlor-1-phenyl-2′-naphthylsulfon, 2-Amino-4′-methyl-1,1′-diphenylsulfon, 2-Amino-4′-chlor-1,1′-diphenylsulfon, 2-Amino-1-phenyl-2′-naphthylsulfon, 4-Amino-4′-chlor-1,1′-diphenylsulfon, 4-Amino-1,1′-diphenylsulfon, Anilin-4-sulfamid, Anilin-4-N-methylsulfamid, Anilin-4-N-äthylsulfamid, Anilin-2-N-methyl-N-β-hydroxyäthylsulfamid, Anilin-4-N-methyl-N-β-hydroxyäthylsulfamid, Anilin-4-N,N-dimethylsulfamid, Anilin-4-N-phenylsulfamid, 2-Chlor-5-(4′-methylphenylcarbonyl)-anilin, 2-Amino-1-phenyl-2′-naphthylsulfon-4-sulfamid, Anilin-2-N-äthyl-N-phenylsulfamid, 2-Chlor-5(4′-chlorphenyl-carbonyl)-anilin, Anilin-4-N(2′-methylphenyl)-sulfamid, Anilin-4-N(2′-chlorphenyl)-sulfamid, Anilin-4-N(3′-trifluormethylphenyl)-sulfamid, Anilin-2-N-methyl-N-cyclohexylsulfamid, 4-Methylanilin-3-N-phenylsulfamid, 4-Methylanilin-3-N-äthyl-N-phenylsulfamid, 2-Trifluormethyl-4-acetylaminoanilin, 2-Chloranilin, 2-Methoxy-5-chloranilin, Anilin, 2-Aethoxyanilin, 2-(2′-Chlorphenoxy)-5-chloranilin, Anilin-3-N-äthyl-N-phenylsulfamid, 2,4-Di(o-methylphenoxy)-anilin, 2-Phenoxyanilin-5-N-äthyl-N-Phenylsulfamid, 2-(2′-Methylphenoxy)-anilin, 2-Methoxyanilin-5-sulfamid, 2-Phenoxyanilin, 2-Phenoxy-5-chloranilin, 2,3-oder 3,4 oder 2,4 oder 2,5- oder 3,5- oder 2,6-Dichloranilin, 2-(2′-Chlorphenoxysulfonyl)-5-methylanilin, 2-, 3- oder 4-Sulfoanilin.

Die Kupplungskomponenten können sich z.B. von folgenden Gruppen von Kupplungskomponenten ableiten:

- In o-Stellung zur OH-Gruppe kuppelnde Naphthole, die gegebenenfalls mit Halogen, wie z.B. Chlor, Amino, Acylamino, wie $C_{2-5}$-Alkanoylamino, Benzoylamino, Acyl, wie $C_{2-5}$-Alkanoyl, Benzoyl, $C_{1-4}$-Alkyl, $C_{1-4}$-Alkoxy,Sulfonamido-, N-mono oder N,N-disubstituierten Sulfonamidogruppen, Sulfo- und Sulfongruppen substituiert sind.
- In o-Stellung zur Aminogruppe kuppelnde Naphthylamine, die gegebenenfalls mit Halogen, insbesondere Brom, $C_{1-4}$-Alkyl, $C_{1-4}$-Alkoxy, Sulfonamido-, mono- oder disubstituierten Sulfonamido-, Sulfo- oder Sulfongruppe substituiert sind.
- 5-Pyrazolone, die in 1-Stellung einen gegebenenfalls mit Chlor, Nitro, $C_{1-4}$-Alkyl- und Alkoxygruppen, Sulfonamido-, N-alkylierten Sulfonamidogruppen, Sulfo- oder Sulfongruppen und insbesondere Aminogruppen substituierten Phenyl- oder Naphthylrest besitzen.
- 2,6-Dihydroxy-3-cyano- oder -3-carbonamido-4-alkylpyridine und 6-Hydroxy-2-pyridone, die in 1-Stellung durch gegebenenfalls substituiertes $C_{1-4}$-Alkyl, z.B. Methyl, Isopropyl, β-Hydroxyäthyl, β-Aminoäthyl, γ-Isopropoxypropyl oder durch $-NH_2$ oder eine substituierte Aminogruppe wie z.B. Dimethylamino oder Diäthylamino substituiert sind, in 3-Stellung eine Cyano- oder Carbonamidogruppe und in 4-Stellung eine $C_{1-4}$-Alkylgruppe, insbesondere Methyl, tragen.

- Acetessigsäureanilide oder -naphthylamide und Benzoylessigsäureanilide, die im Anilidkern gegebenenfalls mit $C_{1-4}$-Alkyl-, $C_{1-4}$-Alkoxy-, $C_{1-4}$-Alkylsulfonylgruppen, $C_{1-4}$-Hydroxyalkyl-, $C_{1-4}$-Alkoxy-$C_{1-4}$-alkyl oder $C_{1-4}$-Cyanalkylsulfonylgruppen, Sulfonamido-, N-alkylierten Sulfonamidogruppen, Sulfo, Acetylamino und Halogen substituiert sein können.
- Phenole, die mit niedrigmolekularen Acylaminogruppen und/oder mit 1 bis 5 Kohlenstoffatome enthaltenden Alkylgruppen substituiert sind und in o-Stellung kupplen.
- Chinoline, die durch 1 oder 2 Hydroxygruppen substituiert sind.

Beispiele solcher Kupplungskomponenten sind

2-Naphthol, 1-Naphthol, 1-Hydroxynaphthalin-4- oder 5-sulfonsäure, 1,3- oder 1,5-Dihydroxynaphthalin, 1-Hydroxy-7-aminonaphthalin-3-sulfonsäure, 2-Naphthol-6-sulfonamid, 1-Hydroxy-7-N-methy- oder N-acetylaminonaphthalin-3-sulfonsäure, 2-Naphthol-6-$\beta$-hydroxyäthylsulfon, 1-Hydroxy-6-amino- oder -6-N-Methyl- oder -6-N-Acetylaminonaphthalin-3-sulfonsäure, 1-Hydroxy-7-aminonapthalin-3,6-disulfonsäure, 1-Hydroxy-6-aminonaphthalin-3,6-disulfonsäure,1-Acetylamino-7-naphthol, 1-Hydroxy-6-N-(4′-aminophenyl)-aminonaphthalin-3-sulfonsäure, 1-Hydroxy-5-aminonaphthalin-3-sulfonsäure, 1-Propionylamino-7-naphthol, 2-Hydroxy-6-aminonaphthalin-4-sulfonsäure, 1-Carbonmethoxyamino-7-naphthol, 1-Hydroxy-8-aminonaphthalin-5-sulfonsäure, 1-Carboäthoxy-amino-7-naphthol, 1-Hydroxy-8-aminonaphthalin-5,7-disulfonsäure, 1-Carbopropoxyamino-7-naphthol, 1-Hydroxy-8-aminonaphthalin-3-sulfonsäure, 1-Dimethylaminosulfonylamino-7-naphthol, 6-Acetylamino-2-naphthol, 1-Hydroxy-8-amino-naphthalin-3,5-oder -3,6-disulfonsäure, 4-Acetylamino-2-naphthol, 2-Hydroxy-5-aminonaphthalin-4,7-disulfonsäure, 4-Methoxy-1-naphthol,4-Acetylamino-1-naphthol, 1-Naphthol-3-, -4- oder -5-sulfonamid, 2-Naphthol-3-, -4-, -5-, -6-, -7- oder -8-sulfonamid, 5,8-Dichlor-1-naphthol, 5-Chlor-1-naphthol, 2-Naphthylamin, 2-Naphthylamin-1-sulfonsäure, 2-Aminonaphthalin-5-, -6- oder -7-sulfonamid, 2-Aminonaphthalin-6-sulfonsäure-N-methyl-, -äthyl-, -isopropyl-, -$\beta$-oxyäthyl-oder -$\gamma$-methoxypropylamid, 2-Aminonaphthalin--6-sulfanilid, 2-Aminonaphthalin-6-sulfonsäure-N-methylanilid, 1-Amino-naphthalin-3-, -4- oder -5-sulfonamid, 1-Aminonaphthalin-5-methyl-oder -äthylsulfon, 5,8-Dichlor-1-aminonaphthalin, 2-Phenylaminonaphthalin, 2-N-Methylaminonaphthalin, 2-N-Aethylaminonaphthalin, 2-Phenylaminonaphthalin-5-, -6- oder -7-sulfonamid, 2-(3′-Chlorphenylamino)-naphthalin-5-, -6- oder -7-sulfonamid, 6-Methyl-2-aminonaphthalin, 6-Brom-2-amino-naphthalin, 6-Methoxy-2-aminonaphthalin, 1,3-Dimethylpyrazolon, 3-Methyl-5-pyrazolon, 1-Phenyl-3-methyl-5-pyrazolon, 1-Phenyl-3-carbonamido-5-pyrazolon, 1-(2′-, 3′- oder 4′-Methylphenyl)-3-methyl-5-pyrazolon, 1-[3′- oder 4′-($\beta$-Hydroxyäthylsulfonyl)-phenyl]-3-methyl-5-pyrazolon, 1-(2′-Methoxyphenyl)-3-methyl-5-pyrazolon,1-(2′-, 3′- oder 4′-Chlorphenyl)-3-methyl-5-pyrazolon, 1-(2′-, 3′- oder 4′-Nitrophenyl)-3-methyl-5-pyrazolon, 1-(2′,5′-oder 3′,4′-Dichlorphenyl)-3-methyl-5-pyrazolon, 1-(2′-, 3′- oder 4′-Sulfamoylphenyl)-3-methyl-5-pyrazolon, 1-(2′-, 3′- oder 4′-Methylsulfonylphenyl)-3-methyl-5-pyrazolon, 2,6-Dihydroxy-3-cyano-4-methylpyridin, 1-Methyl-3-cyano-4-äthyl-6-hydroxypridon-(2), 1-Amino-3-cyano-4-methyl-6-hydroxypyridon-(2), 1-Phenyl-3-carbonamido-4-methyl-6-hydroxypyridon-(2), Acetoacetanilid, Acetoacet-o-, -m- oder -p-sulfoanilid, Acetoacet-4-(hydroxyäthylsulfonyl)-anilid, Acetoaceto-anisidid, acetoacetnaphthylamid, Acetoacet-o-toluidid, Acetoacet-o-chloranilid, Acetoacet-m- oder -p-chloranilid, Acetoacetanilid-3-oder -4-sulfonamid, Acetoacet-3-oder -4-aminoanilid, Acetoacet-m-xylidid, Benzoylessigsäureanilid, 4-Methylphenol, 3-Dialkylaminophenol, besonders 3-Dimethylamino- und 3-Diäthyl-aminophenol, 4-t-Butylphenol, 4-t-Amylphenol, 2- oder 3-Acetylamino-4-methylphenol, 2-Methoxycarbonylamino-4-methylphenol, 2-Aethoxycarbonylamino-4-methylphenol, 3,4-Dimethylphenol und 2,4-Dimethylphenol, 1-(4′-Aminophenyl)-3-methyl-5-pyrazolon, 1-(2′-, 3′- oder 4′-Sulfonphenyl)-3-methyl-5-pyrazolon, 1-(2′-Chlor-4′- oder 5′-sulfophenyl)-3-methyl-5-pyrazolon, 1-(2′-Methyl-6′-chlorphenyl)-3-methyl-5-pyrazolon, 1-(2′-Methyl-4′-sulfophenyl)-3-methyl-5-pyrazolon, 1-(2′-, 3′- oder 4′-Chlor- oder Methyl- oder Sulfophenyl)-3-carboxy-5-pyrazolon, 1-[5′-sulfonaphthyl(2′)]-3-methyl-5-pyrazolon, 1-[4″-Amino-2′,2″-disulfostilben-(4′)]-3-methyl-5-pyrazolon, 1-Aethyl-3-cyano-4-methyl-6-hydroxypyridon-(2), 1-Aethyl-3-sulfomethyl-4-methyl-6-hydroxypyridon-(2), 2,6-Dihyrodyx-3-cyano-4-sulfomethylpyridin, 2,4,6-Trihydroxypyrimidin.

Als weitere Kupplungskomponente, welche zwei zur Komplexbildung geeignete Gruppen enthält, die nicht in Nachbarstellung zur Kupplungsstelle an die Kupplungskomponente gebunden sind, sei z.B. genannt: 8-Hydroxychinolin.

Als das Chrom-, Kobalt-, Nickel- oder Eisenatom abgebende Verbindungen kommen z.B. die üblichen Salze oder Komplexverbindungen dieser Metalle in Betracht, wie z.B. Chrom(III)-chlorid, Chrom(III)-fluorid,Chrom(III)-acetat, $Cr(OH)SO_4$, Chrom(III)-formiat, Kobalt(II)-sulfat, Kobalt(II)-acetat, Kobaltartrat, frisch gefälltes Kobalt(II)-hydroxid, Nickelsulfat, Eisen(III)chlorid; sowie komplexe Eisen- und Chromverbindungen, aliphatische Dicarbonsäuren, Hydroxycarbonsäuren oder aromatische Hydroxycarbonsäuren, wie z.B. Natriumchromsalicylat.

Eine bevorzugte Ausführungsform des erfindungsgemässen Verfahrens zur Herstellung symmetrischer 1:2-Metallkomplexazofarbstoffe der Formel

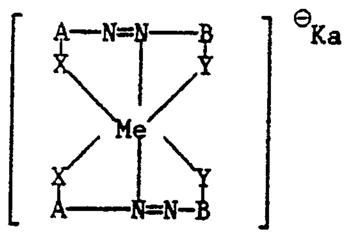

(1),

worin A je der identische Rest einer Diazokomponente der Benzol-oder Naphthalinreihe, B je der identische Rest einer Kupplungskomponente der Benzol- oder Naphthalinreihe oder der heterocyclischen Reihe, X je der -O- oder -COO- Rest, Y je der -O- oder -N(R)-Rest ist, wobei R Wasserstoff, $C_{1-4}$-Alkyl oder Phenyl ist, Me Chrom, Kobalt oder Eisen, insbesondere Chrom oder Kobalt, und Ka ein Kation bedeutet, und X und Y in Nachbarstellung zur Azogruppe an A und B gebunden sind, ist dadurch gekennzeichnet, dass man ein Amin der Formel

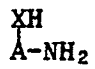

(2)

diazotiert und auf eine Kupplungskomponente der Formel

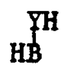

(3)

deren Lösung die das Chrom-, Kobalt- oder Eisenatom, insbesondere Chrom- oder Kobaltatom abgebende Verbindung enthält, kuppelt, wobei A, B, X und Y in Formeln (2) und (3) die unter Formel (1) angegebenen Bedeutungen haben.

Eine ebenfalls bevorzugte Ausführungsform des erfindungsgemässen Verfahrens zur Herstellung von gemischten 1:2-Metallkomplexazofarbstoffen, bestehend aus mindestens zwei symmetrischen und mindestens einem asymmetrischen 1:2-Chrom-, 1:2-Kobalt- oder 1:2-Eisenkomplex, ist dadurch gekennzeichnet, dass man mindestens ein Amin der Formel (2) auf mindestens eine Kupplungskomponente der Formel (3) kuppelt, wobei die Lösung der Kupplungskomponente(n) die das Chrom-, Kobalt- oder Eisenatom abgebende Verbindung enthält mit der Bedingung, dass mindestens zwei Amine der Formel (2) oder mindestens zwei Kupplungskomponenten der Formel (3) verwendet werden. Die erfindungsgemässe Herstellung der 1:2-Chrom- oder 1:2-Kobaltkomplexe ist bevorzugt.

In den beiden oben genannten bevorzugten Ausführungsformen verwendet man vorteilhaft ein Amin der Formel (2), worin A ein Benzol- oder Naphthalinrest ist, der substituiert sein kann durch $C_{1-4}$-Alkyl, $C_{1-4}$-Alkoxy, Halogen, Nitro, Sulfamoyl, N-$C_{1-4}$-Alkylsulfamoyl, N-$C_{1-4}$-Alkoxy-$C_{1-4}$-alkylsulfamoyl, Phenylaminosulfonyl, Carboxyphenylaminosulfonyl, $C_{1-4}$-Alkylsulfonyl, $C_{2-5}$-Alkanoylamino, Cyan, Trifluormethyl und Sulfo.

Als Kupplungskomponente der Formel (3) verwendet man vorteilhaft Acetoacetanilid, 1-Phenyl-3-methyl-5-pyrazolon, 1- oder 2-Naphthol oder 2-Naphthylamin, die substituiert sein können durch Halogen, $C_{1-4}$-Alkyl, Cyan, Sulfamoyl, $C_{1-4}$-Alkanoylamino, $C_{2-5}$-Alkoxycarbonylamino, $C_{1-4}$-Alkylsulfonylamino, $C_{1-4}$-Alkoxy, Sulfo, Hydroxy, Phenyl oder $-SO_2-CH_2-O-$. Ferner kann als Kupplungskomponente der Formel (3) auch Phenol, welches durch $C_1$-$C_5$-Alkyl substituiert sein kann, verwendet werden.

Eine weitere bevorzugte Ausführungsform des erfindungsgemässen Verfahrens zur Herstellung von symmetrischen 1:2-Chrom- oder 1:2-Kobaltkomplexazofarbstoffen ist dadurch gekennzeichnet, dass man ein Amin der Benzol- oder Naphthalinreihe, welches durch die weiter oben angegebenen Substituenten substituiert sein kann, diazotiert und auf eine heterocyclische Kupplungskomponente, welche zwei zur Komplexbildung geeignete Gruppen enthält kuppelt; insbesondere bevorzugt wird bei dieser Ausführungsform des erfindungsgemässen Verfahrens ein Amin der Benzolreihe, vorzugsweise eine Anilinsulfonsäure, und als Kupplungskomponentne 8-Hydroxychinolin verwendet; ganz besonders bevorzugt wird bei dieser Ausführungsform des erfindungsgemässen Verfahrens als metallabgebende Verbindung eine das Kobaltatom abgebende Verbindung verwendet.

Eine wichtige Ausführungsform des erfindungsgemässen Verfahrens ist dadurch gekennzeichnet, dass

man die Farbstoffe der folgenden Formeln erfindungsgemässen herstellt:

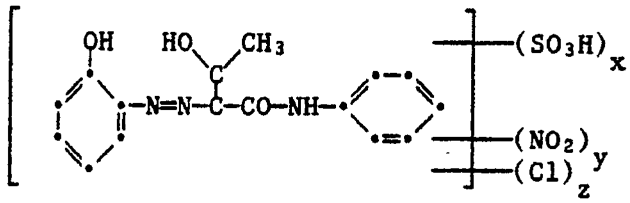

(4),

1:2-Chrom-, 1:2-Kobalt- oder 1:2-Eisenkomplex

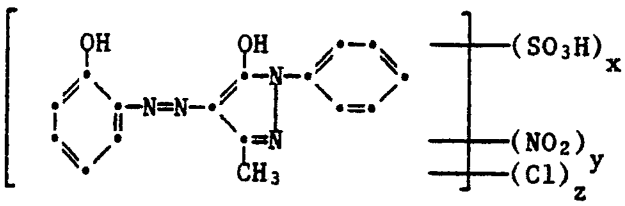

(5),

1:2-Chrom-, 1:2-Kobalt- oder 1:2-Eisenkomplex

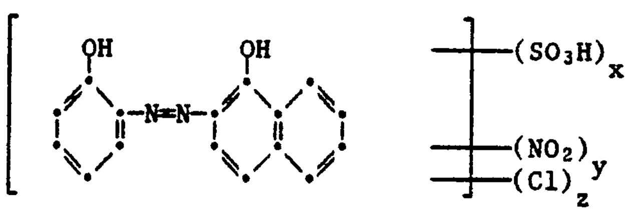

(6),

1:2-Chrom-, 1:2-Kobalt- oder 1:2-Eisenkomplex

wobei in den Formeln (4) bis (6) x die Zahl 1 oder 2 vorzugsweise 1, y die Zahl 0, 1 oder 2, vorzugsweise 1 und z die Zahl 0, 1 oder 2, vorzugsweise 0 oder 1 bedeutet.

Eine besonders bevorzugte Ausführungsform des erfindungsgemässen Verfahrens ist dadurch gekennzeichnet, dass man die Farbstoffe der folgenden Formeln erfindungsgemässen herstellt:

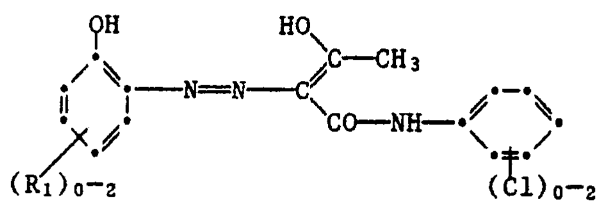

(7)

1:2-Kobaltkomplex

worin $(R_1)_{0-2}$ für 0 bis 2 Substituenten $R_1$ steht, die unabhängig voneinander $C_{1-4}$-Alkyl, $C_{1-4}$-Alkoxy, Halogen, Nitro, Sulfamoyl, Sulfo, N-$C_{1-4}$-Alkylsulfamoyl, N-$C_{1-2}$-Alkoxy-$C_1$-$C_2$-alkylsulfamoyl, Phenylaminosulfonyl, Carboxyphenylaminosulfonyl, $C_{1-4}$-Alkylsulfonyl oder Acetylamino sein können;

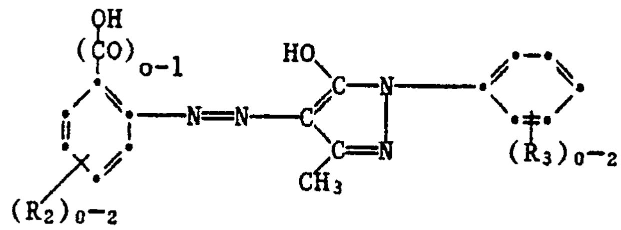

(8),

1:2-Kobalt- oder 1:2-Chromkomplex

worin $(R_2)_{0-2}$ für 0 bis 2 Substituenten $R_2$ steht, die unabhängig voneinander $C_{1-4}$-Alkyl, $C_{1-4}$-Alkoxy, Halogen, Nitro, Sulfamoyl, Sulfo, N-$C_{1-4}$-Alkylsulfamoyl, N-$C_{1-2}$-Alkoxy-$C_{1-3}$-alkylsulfamoyl, Phenylaminosulfonyl, Carboxyphenylaminosulfonyl, $C_{1-4}$-Alkylsulfonyl oder Acetylamino sein können, und $(R_3)_{0-2}$ für 0 bis 2 Substituenten $R_3$ steht, die unabhängig voneinander Halogen, $C_{1-4}$-Alkyl, Cyan, Sulfo oder Sulfamoyl sein können;

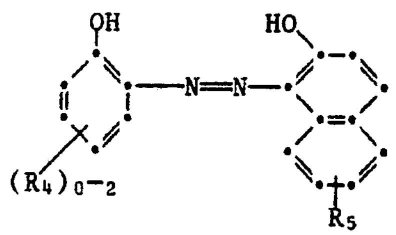

(9),

1:2-Kobalt- oder 1:2-Chromkomplex

worin $R_4$ die gleiche Bedeutung hat wie $R_1$ in Formel (7), und $R_5$ Wasserstoff, Acetylamino, Methoxycarbonylamino oder Methylsulfonylamino ist;

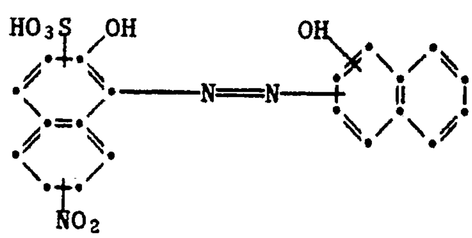

(10),

1:2-Kobalt- oder 1:2-Chromkomplex

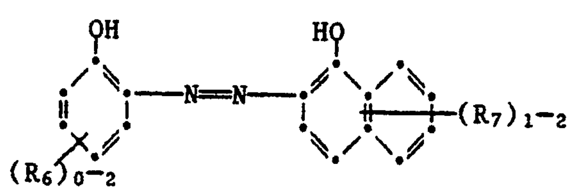

(11),

1:2-Chrom- oder 1:2-Kobaltkomplex

worin $R_6$ die gleiche Bedeutung hat wie $R_1$ in Formel (7), und $(R_7)_{1-2}$ für 1 bis 2 Substituenten $R_7$ steht, die unabhängig voneinander Halogen, Methyl, Methoxy oder Sulfo sein können, oder worin 2 benachbarte Substituenten $R_7$ ein geschlossenes Brückenglied $-SO_2CH_2-O-$ bilden können;

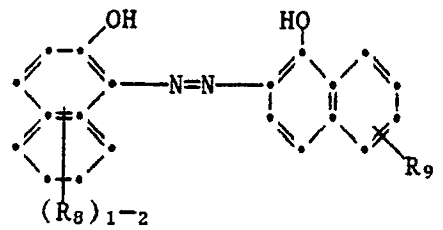

(12),

1:2-Kobalt- oder 1:2-Chromkomplex

worin $(R_8)_{1-2}$ für 1 bis 2 Substituenten $R_8$ steht, die unabhängig voneinander Sulfo oder Nitro sein können und $R_9$ Wasserstoff oder Hydroxy ist;

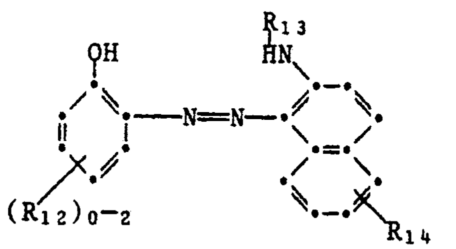

(13),

1:2-Kobaltkomplex

worin $R_{12}$ die gleiche Bedeutung hat wie $R_1$ in Formel (7), $R_{13}$ Wasserstoff oder Phenyl ist und $R_{14}$ Wasserstoff oder Sulfo ist;

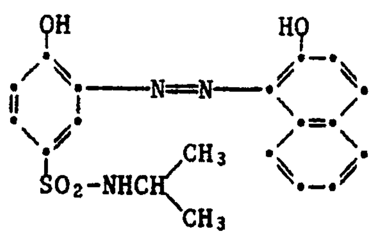

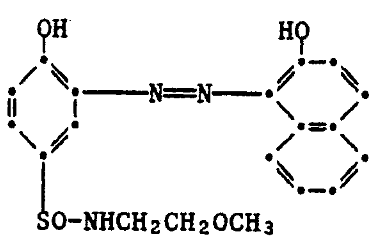

1:2-Kobaltkomplex (14), 1:2-Kobaltkomplex (15),

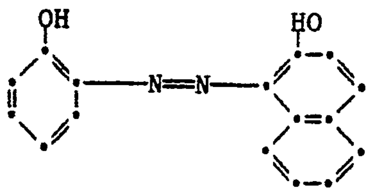

1:2-Kobaltkomplex (16)

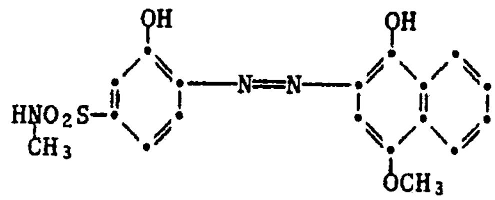

1:2-Chromkomplex (17)

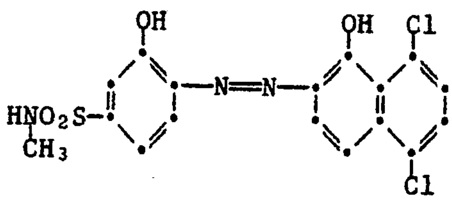

1:2-Chromkomplex (18)

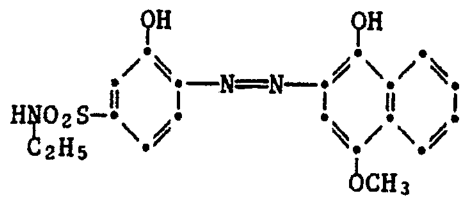

1:2-Chromkomplex (19)

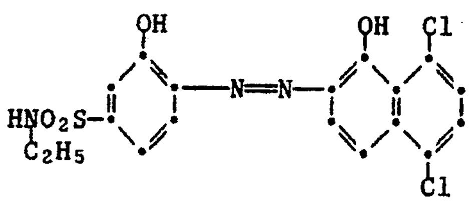

1:2-Chromkomplex (20)

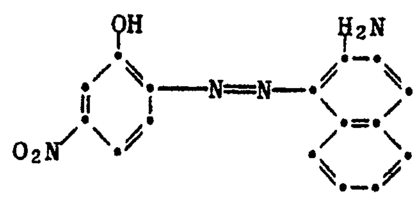

1:2-Kobaltkomplex (21)

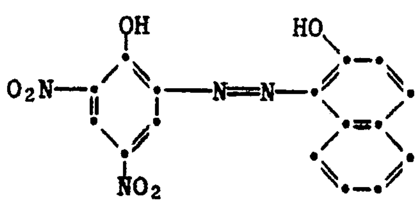

1:2-Chromkomplex (22)

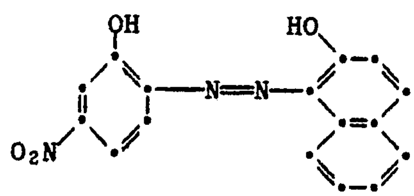

1:2-Chromkomplex (23)

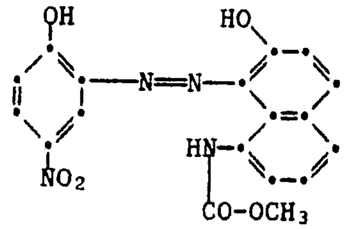

(24),

1:2-Chromkomplex

Die Herstellung der Farbstoffe der Formeln (7) bis (24) durch Diazotierung eines Amins und Kupplung auf eine Kupplungskomponente in Gegenwart eines Chrom- oder Kobalt abgebenden Mittels entspricht der Herstellung wie weiter oben beschrieben für Diazotierung, Kupplung und Metallisierung mit den Verbindung der Formeln (2) und (3).

Eine ganz besonders bevorzugte Ausführungsform des erfindungsgemässen Verfahrens ist dadurch gekennzeichnet, dass man als Amin der Formel (2) mindestens ein 2-Amino-5-sulfamoylphenol, 2-Amino-5- oder 4-Nitrophenol, 2-Amino-4-nitro-6-sulfophenol, 2-Amino-6-methylphenol-4-sulfonsäure, 2-Amino-4-methyl-5-nitrophenol, 2-Amino-4-chlor-5-nitrophenol, 2-Aminobenzoesäure, 2-Amino-5-sulfobenzoesäure, 2-Amino-6-nitrophenol-4-sulfonsäure, 2-Amino-4-chlorphenol-5-sulfamid, 1-Amino-2-hydroxy-6-nitronaphthalin-4-sulfonsäure, 1-Amino-2-hydroxynaphthalin-4-sulfonsäure, 2-Aminophenol-4-β-methoxyäthylsulfonsäureamid oder 2-Aminophenol-4-[2'-carboxyphenyl]-sulfonsäureamid verwendet und als Kupplungskomponente der Formel (3) mindestens ein 2-Naphthol, 5,8-Dichlor-1-naphthol, 1-(3'-Methylphenyl)-3-methyl-5-pyrazolon, 1-Phenyl-3-methyl-5-pyrazolon, 1-(2',5'-Dichlor- oder 3',4'-Dichlorphenyl)-3-methyl-5-pyrazolon, 1-(2'-oder3'- oder 4'-Chlorphenyl)-3-methyl-5-pyrazolon, 2-Naphthylamin-6-sulfonsäuremethylamid, Acetoacet-2'-chlor oder 3'-chloranilid, 1-(4'-Sulfonphenyl)-3-methyl-5-pyrazolon, Acetessigsäurenanilid, 1-Naphthol-3- oder -4- oder -5-sulfonsäure, 2-Naphthylamin-6-sulfonsäure, 4-Dimethyläthylmethylphenol oder 1-(3'-Sulfophenyl)-3-methyl-5-pyrazolon verwendet.

Eine ebenfalls ganz besonders bevorzugte Ausführungsform des erfindungsgemässen Verfahren ist dadurch gekennzeichnet, dass man Anilin-3-sulfonsäure diazotiert und auf 8-Hydroxychinolin kuppelt, wobei die Kupplung in Gegenwart einer das Kobaltatom abgebenden Verbindung erfolgt.

Insbesondere ist in dem erfindungsgemässen Verfahren das molare Verhältnis von Amin zu der Kupplungskomponente bzw. das molare Verhältnis der Summe aller eingesetzten Amine zu der Summe aller eingesetzten Kupplungskomponenten 0,8:1,0 bis 1,2:1,0 insbesondere 0,9:1,0 bis 1,1:1,0.

In dem erfindungsgemässen Verfahren ist das molare Verhältnis der Summe der Amine bzw. der Summe der Kupplungskomponenten zu dem Metallisierungsmittel 1,2:1,0 bis 2,4:1,0 und insbesondere 1,6:1,0 bis 2:1.

Im allgemeinen hat sich in dem erfindungsgemässen Verfahren ein Ueberschuss an Metallisierungsmittel von 1 bis 20 Gewichtsprozent als vorteilhaft erwiesen.

Die erfindungsgemäss erhaltenen Farbstoffe liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamine genannt.

Die erfindungsgemäss erhaltenen Farbstoffe können noch an sich bekannten Methoden isoliert und zu brauchbaren, trockenen Färbepräparaten verarbeitet werden. Die Isolierung erfolgt vorzugsweise bei möglichst niedrigen Temperaturen durch Aussalzen und Filtrieren oder durch Umkehrosmose oder Ultrafiltration. Die filtrierten Farbstoffe können gegebenenfalls nach Zugabe von Coupagemitteln und/oder Puffermitteln, z.B. nach Zugabe eines Gemisches gleicher Teile Mono- oder Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischen-isolierung der Farbstoffe herstellen.

Die nach dem erfindungsgemässen Verfahren erhaltenen 1:2-Metallkomplexazofarbstoffe eignen sich zum Färben und Bedrucken verschiedenster Stoffe, vor allem aber zum Färben tierischer Materialien, wie Seide, Leder und insbesondere Wolle, aber auch zum Färben und Bedrucken synthetischer Fasern aus Superpolyamiden (insbesondere Polyamid 6 und Polyamid 66), Superpolyurethanen oder Polyacrylnitril und

als Holzbeizenfarbstoffe. Sie sind vor allem zum Färben aus schwach alkalischem, neutralem oder schwach saurem, vorzugsweise essigsaurem Bad geeignet. Die so erhaltenen Färbungen sind gleichmässig, sehr brillant und haben gute Allgemeinechtheiten, insbesondere gute Licht- und Nassechtheiten.

Das genannte Textilmaterial kann dabei in den verschiedensten Verarbeitungsformen vorliegen, wie z.B. als Faser, Garn, Gewebe oder Gewirke.

Aus der US-A-1 480 640 und der DE-C-350 697 sind ähnliche Verfahren bekannt, welche jedoch nicht alle vorteilhaften Eigenschaften des erfindungsgemässen Verfahrens aufweisen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Zu 34,7 Teilen 2-Amino-5-nitrophenol in 160 Teilen Wasser und 22,5 Teilen 30%iger Natronlauge gelöst, lässt man 22,5 Teile Kochsalz und 4 Teile Magnesiumchlorid einrieseln und lässt dann 56,3 Teile 4N Natriumnitritlösung zulaufen und stellt mit Wasser auf ein Volumen von 350 Teilen. Diese Lösung lässt man zu 108 Teilen Naphthalin-1-sulfonsäure, 22,5 Teilen 33%-ige Salzsäure in 200 Teilen Eis zulaufen, wobei eine dickflüssige Suspension der gelben Diazoniumsalzkristalle entsteht. Mit Eis wird die Temperatur der Suspension unter 10° C gehalten und es wird ca. 45 Minuten nachgerührt. Zu dieser Suspension des Diazoniumsalzes lässt man eine 50° C warme Suspension enthaltend 149,6 Teile 2-Aminonaphthalin-6-sulfonsäure-N-methylamid, 6 Teile 2-Amino-naphthalin-6-sulfonsäure und 16,6 Teile Kobaltsulfat, die mit Wasser auf ein Volumen von 300 Teilen gestellt ist, zulaufen. Nach Beendigung des Zulaufens beträgt die Temperatur 20 bis 30° C und der pH 1,5 bis 1,7. Sofort nach Beendigung des Zulaufens wird auf ca. 75° C erwärmt und 2 Stunden bei ca. 75° C gerührt. Zu der Suspension lässt man bei 75° C 67,5 Teile Kochsalz einrieseln und stellt mit 30%-iger Natronlauge auf pH 8. Der in feinkristalliner Form vorliegende Farbstoff wird abfiltriert und bei 65° C getrocknet. Der erhaltene Farbstoff färbt Wolle in blauen Tönen mit guten Echtheitseigenschaften.

Beispiel 2: 44,6 Teile 2-Aminophenol-5-sulfamid werden in 80 Teilen Wasser bei 60° C mit 40 Teilen 33%-iger Salzsäure versetzt. Der erhaltenen feinen Suspension werden 8 Teile Magnesiumchlorid in 15 Teilen Wasser sowie 100 Teile Eis und dann 56,3 Teile einer 4N Natriumnitritlösung zugesetzt, wobei die Temperatur unter 10° C gehalten wird. Man lässt ca. 1 Stunde nachrühren, stellt mit 18 Teilen 30%-iger Natronlauge auf pH 3 und setzt 300 Teile Eis zu. Zu dieser Diazoniumsalz-Suspension lässt man bei einer Temperatur unter 0° C eine Lösung enthaltend 50,34 Teile 5,8-Dichlor-1-naphthol, 456 Teile einer 3%-igen Natriumchromsalicylatlösung, 38,5 Teile 20%-ige Natronlauge und 100 Teile Eis zulaufen. Nach Beendigung des Zulaufens stellt man sofort mit 30%iger Natronlauge auf pH 12,5 und lässt ca. 2 Stunden rühren. Anschliessend wird mit Essigsäure auf pH 9 bis 9,5 gestellt und die Reaktionslösung auf 100° C erwärmt. Der pH wird mit Natronlage konstant bei 9,5 gehalten. Man lässt ca. 2 Stunden nachrühren. Anschliessend wird mit Eissigsäure auf pH 7 gestellt, portionenweise 96 Teile Kochsalze zugegeben, abfiltriert und bei 65° C getrocknet. Der erhaltene Farbstoff der Formel

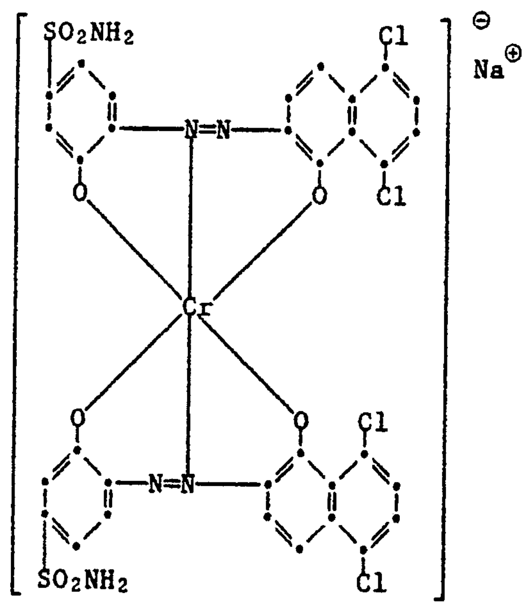

färbt Wolle in blauen Tönen mit guten Echtheitseigenschaften.

Beispiel 3: 31,2 Teile 2-Amino-4-chlorphenol-5-sulfamid werden in 140 Teilen Wasser gut verrührt und mit 16,7 Teilen 32%-iger Salzsäure versetzt. Nach Zugabe von 75 Teilen Eis sinkt die Temperatur auf ca. 0° C. Unter starkem Rühren lässt man 35 Teile 4N Natriumnitritlösung zulaufen, wobei die Temperatur auf 20 bis 25° C steigt. Man lässt 30 Minuten nachrühren und lässt die eerhaltene Diazoniumsalzsuspension in eine 50° C warm Lösung enthaltend 216 Teile einer 3%-igen Natriumchromsalicylatlösung, 25,6 Teile 1-Phenyl-3-methylpyrazol-5-on und 13,4 Teile 30%-ige Natronlauge, zulaufen, heizt sofort auf 80° C, stellt den pH auf 8,5 bis 9 und heizt auf 100° C. Man lässt 90 Minuten bei 100° C rühren, ergänzt das Volumen mit Wasser auf 800 Teile und stellt anschliessend mit 80%-iger Essigsäure auf pH 5,0 und lässt 30 Minuten nachrühren. Anschliessend wird mit Kochsalz ausgesalzen, abfiltriert und bei 65° C getrocknet. Der erhaltene Farbstoff der Formel

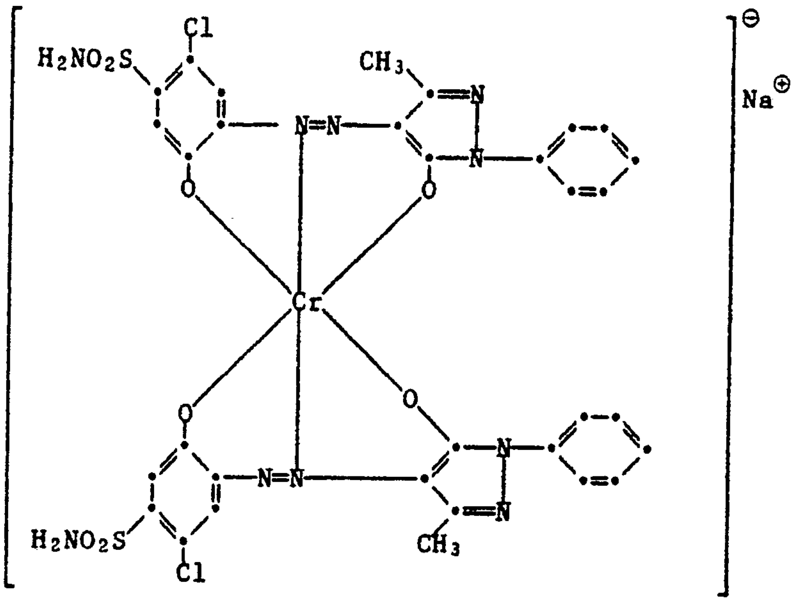

färbt Wolle in roten Tönen mit guten Echtheitseigenschaften.

Beispiel 4: 37 Teile 2-Aminophenol-4-N-(β-methoxyäthyl)-sulfonsäureamid werden in 100 Teilen Wasser mit 36 Teilen 30%-iger Natronlauge bei 30° C gelöst und klarfiltriert. Anschliessend versetzt man mit 200 Teilen Eis und 40 Teilen 33%-iger Salzsäure. Die Temperatur der Lösung beträgt ca. -6° C. Dann werden der Lösung 37,5 Teile 4N Natriumnitritlösung zugesetzt und 30 Minuten nachgerührt. Diese Diazoniumsalzlösung lässt man in feinem Strahl zu einer Lösung enthaltend 210 Teile Wasser, 22,2 Teile 2-Naphthol, 31 Teile 30%-ige Natronlauge und 10,7 Teile Kobaltsulfat, zulaufen. Während des Zulaufens wird der pH mit 30%-iger Natronlauge auf ca. 9,25 gestellt und nach Beendigung des Zulaufens wird die Suspension auf 75° C erwärmt. Man lässt ca. 1 Stunde bei 75° C rühren, stellt dann mit 80%-iger Essigsäure auf pH 5,5 und nach 5 Minuten mit 30%-iger Natronlauge wieder auf pH 9,25 und lässt ca. 75 Minuten nachrühren. Anschliessend verdünnt man die Suspension mit Wasser auf ein Volumen von 1500 Teilen, versetzt mit 150 Teilen Kochsalz, rührt 15 Minuten nach und stellt mit 80%-iger Essigsäure auf pH 7. Nach Abfiltrieren und Trocknen erhält man den Farbstoff der Formel

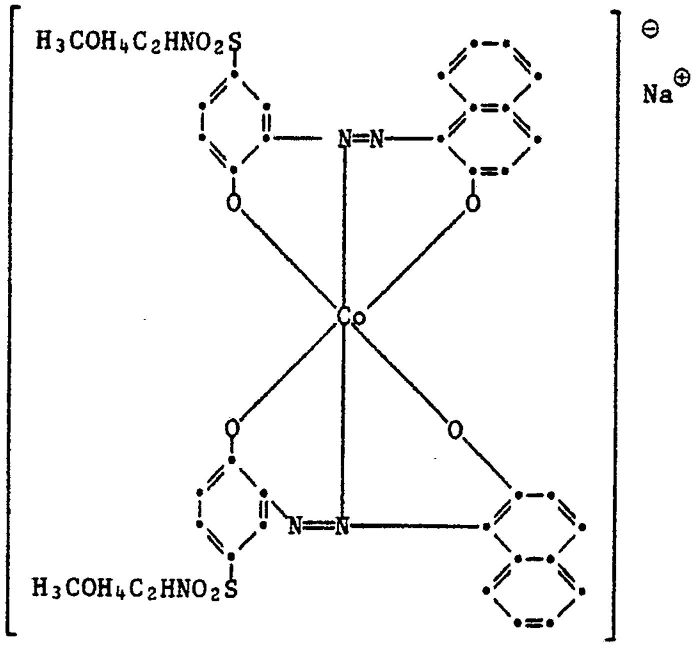

der Wolle in bordeauxfarbenen Tönen mit guten Echtheitseigenschaften färbt.

Beispiel 5:

23,4 Teile 2-Amino-6-nitrophenol-4-sulfonsäure werden in 100 Teile Wasser eingetragen und mit 2N Natronlauge auf pH 7.5 eingestellt. Die erhaltene Lösung wird mit 22.4 Teilen 32 %iger Salzsäure und 160 Teilen Eis versetzt und auf 0° C abgekühlt. Anschliessend gibt man 28 Teile einer 4N Natriumnitritlösung innerhalb einer halben Stunde zu und hält mit 120 Teilen Eis die Temperatur unter 15° C.

Zu dieser Diazoniumsalz-Lösung gibt man die auf pH 6 gestellte kalte Suspensionslösung aus 21,4 Teilen 1,3'-Chlor-phenyl-3-phenyl-pyrazol-5-on, 13.6 Teilen Natriumacetat krist. und 2.6 Teilen Chrom (als 33 %-iges basisches Chrom(III)sulfat-Pulver) innerhalb 5 Minuten zu. Der pH Wert der Mischung wird dabei mit 2N Natronlauge auf pH 6 gestellt und die Temperatur langsam auf 40° C angehoben.

Bei diesem pH Wert wird 1 - 2 Stunden nachgerührt und anschliessend auf Rückfluss erwärmt, bis die Reaktion beendet ist.

Der erhaltene Farbstoff wird bei Raumtemperatur mit 15 Vol % Natriumchlorid und 15 Vol % Kaliumchlorid ausgesalzen, filtriert und getrocknet.

Der erhaltene Farbstoff färbt Wolle, Polyamid, Leder, Holz und Papier in einem roten Farbton mit guten Echtheiten.

Wird anstelle von Chromsulfat, Kobaltsulfat verwendet, so erhält man einen rotbraunen Farbstoff.

Beispiel 6:

15,4 Teile 2-Amino-4-nitro-phenol werden in 40 Teilen Wasser angeschlämmt und mit 20 Teilen 32 %iger Salzsäure versetzt. Nach Zugabe von 120 Teilen Eis wird mit 28 Teilen einer 4N Natriumnitritlösung diazotiert und zum Schluss mit 13,6 Teilen Natriumacetat krist. versetzt.

Zu dieser Diazosuspension gibt man eine Lösung aus 26,7 Teilen 1-(4'-Sulfophenyl)-3-methyl-5-pyrazolon,
100 Teilen Wasser
17 Teilen 3M $FeCl_3$-Lösung und
15 Teilen Weinsäure
deren pH mit 2N Natronlauge auf pH 9 gestellt worden ist, zu. Dabei hält man den pH Wert mit weiterer 2N Natronlauge auf 6. Nach 2 Stunden Rührzeit bei 40° C wird die Temperatur auf 80° C angehoben und für 6 Stunden gehalten. Nach dieser Zeit versetzt man mit 20 Vol % Natriumchlorid und 5 Vol % Kaliumchlorid und lässt auf Raumtemperatur abkühlen. Nach dem Filtrieren und Trocknen erhält man ein dunkles Pulver welches Polyamid, Wolle, Leder, Papier und Holz in braunen Tönen mit guten Echtheiten färbt.

Beispiel 7:

17,5 Teile 2-Amino-4-nitro-phenol-6-sulfonsäure werden mit 50 Teilen Wasser und 150 Teile Eis versetzt. Nachdem man 17,2 Teile 32%ige Salzsäure zugegeben hat wird mit 18,5 Teilen 4N Natriumnitritlösung diazotiert.

Diese Diazolösung wird in ein Reaktionsgemisch bestehend aus

13,9 Teilen Acetessigsäureanilid

11,6 Teilen Natronlauge (30 %)

11,0 Teilen Kobaltsulfat•7 $H_2O$

zugegeben. Der pH wird während der Diazozugabe mit 2N Natronlauge bei 8 - 10 gehalten und man lässt die Temperatur auf 40 °C ansteigen. Nach einer Stunde erwärmt man die Mischung auf 85 °C, stellt für eine halbe Stunde den pH mit 2N Salzsäure auf pH 5.5 und anschliessend mit 2N Natronlauge wieder auf 9 zurück. Nachdem die Reaktion beendet ist, wird das Wasser am Rotationsverdampfer abgezogen.

Das erhaltene gelbe Pulver färbt Wolle, Polyamid, Leder, Holz und Papier in einem gelben Farbton mit guten Echtheiten.

Beispiel 8:

92,4 Teile 2-Aminophenol-4-(2'-carboxy)-sulfanilid werden in 180 Teilen Wasser homogenisiert und mit Eis auf 5° gestellt. Anschliessend versetzt man mit 47,5 Teilen 32%-iger Salzsäure und diazotiert mit 20,7 Teilen in Wasser gelöstem Natriumnitrit.

Diese Suspension des Diazoniumsalzes lässt man zu einer Suspension enthaltend 66,5 Teile Acetessigsäure-2'-chloranilid, 200 Teile Wasser, 40 Teile konzentrierter Natronlauge, 22,3 Teile Kobaltsulfat und 10 Teile 3-Nitrobenzolsulfonsäure, die auf pH 8 gestellt ist, zulaufen. Man stellt den pH auf 7,5 und erwärmt auf 50°. Nach beendeter Umsetzung entsteht ein gelber Farbstoff mit 85%-iger Ausbeute bezogen auf die eingesetzte Diazokomponente, welcher Wolle mit guten Echtheiten in gelbem Farbton färbt.

Beispiel 9:

34,6 g Anilin-3-sulfonsäure werden nach üblicher Weise mit 50 ml 4N Natriumnitritlösung und Salzsäure wässerig diazotiert. Nachdem man 100 ml 1 M Kobaltsulfatlösung eingetropft hat gibt man 29,1 g 8-Oxychinolin gelöst in Salzsäure zu. Der pH-Wert beträgt ca. 1, die Temperatur ca. 10 °C. Der pH-Wert wird mit Natronlauge auf 5 gestellt, und die Temperatur langsam auf 40 °C erhöht. Nachdem kein Diazoniumsalz mehr nachweisbar ist, wird auf 80 °C erwärmt. Nach ca. 3-6 Stunden ist die Metallisierung beendet und das Wasser wird am Rotationsverdampfer abgezogen. Man erhält ca. 135 g eines dunklen Pulvers, dass Leder in einem gelbbraunen Farbton färbt.

Wenn man wie in den Beispielen 1 bis 9 angegeben verfährt und anstelle der Amine, Kupplungskomponenten und Metalle die in der folgenden Tabelle in Spalte 2 angegebenen Amine, die in Spalte 3 angegebenen Kupplungskomponenten und die in Spalte 4 angegebenen Metalle verwendet, so erhält man 1:2-Metallkomplexfarbstoffe, die Wolle in dem in Spalte 5 angegebenen Farbton anfärben.

Tabelle 1

| Beispiel | Amin | Kupplungskomponente | Metall | Nuance |
|---|---|---|---|---|
| 1. | 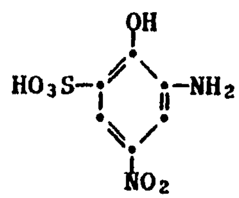 | 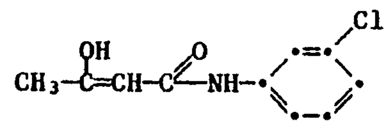 | Co | gelb |
| 2. | 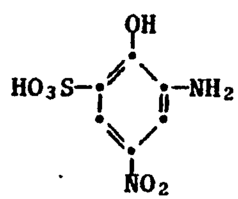 | 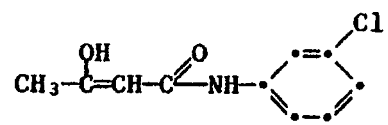 | Fe | gelb |
| 3. | 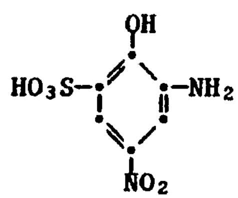 | 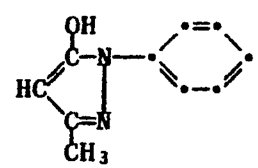 | Cr | orange |

Tabelle 1 (Fortsetzung)

| Beispiel | Amin | Kupplungskomponente | Metall | Nuance |
|---|---|---|---|---|
| 4. | 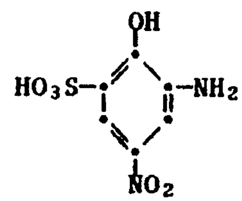 | 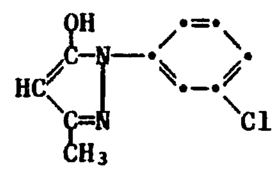 | Cr | orange |
| 5. | 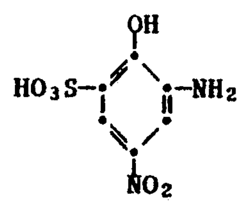 | 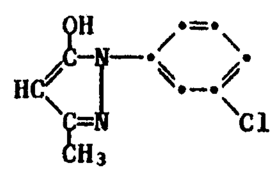 | Co | gelbbraun |
| 6. | 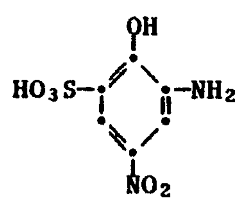 | 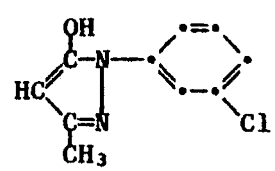 | Fe | gelbbraun |

Tabelle 1 (Fortsetzung)

| Beispiel | Amin | Kupplungskomponente | Metall | Nuance |
|---|---|---|---|---|
| 7. | 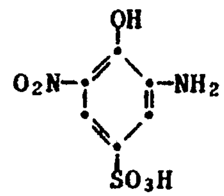 | 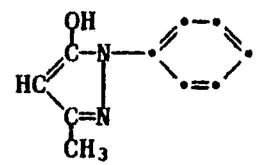 | Cr | rot |
| 8. | 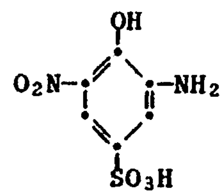 | 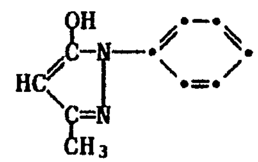 | Co | orange |
| 9. | 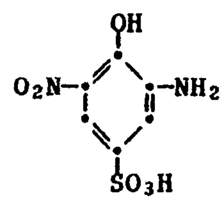 | 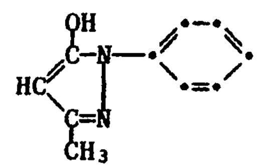 | Fe | braun |

Tabelle 1 (Fortsetzung)

| Beispiel | Amin | Kupplungskomponente | Metall | Nuance |
|---|---|---|---|---|
| 10. | 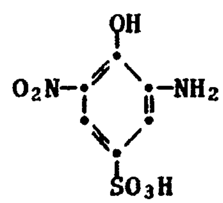 | 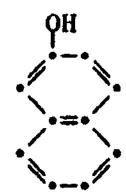 | Cr | blauviolett |
| 11. | 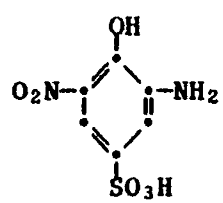 | 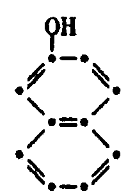 | Co | rotviolett |
| 12. | 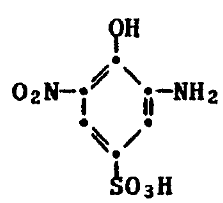 | 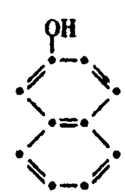 | Fe | braunviolett |

Tabelle 1 (Fortsetzung)

| Beispiel | Amin | Kupplungskomponente | Metall | Nuance |
|---|---|---|---|---|
| 13. | 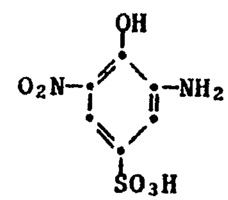 | 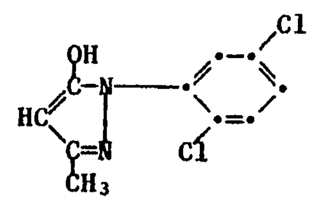 | Co | rotbraun |
| 14. | 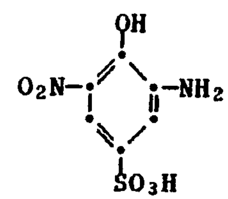 | 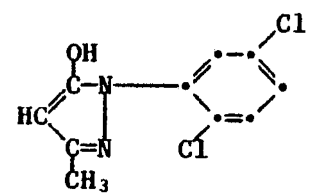 | Cr | rot |
| 15. | 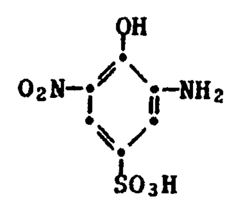 | 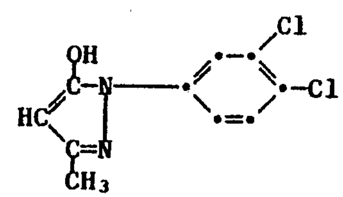 | Cr | rot |

Tabelle I (Fortsetzung)

| Beispiel | Amin | Kupplungskomponente | Metall | Nuance |
|---|---|---|---|---|
| 16. | 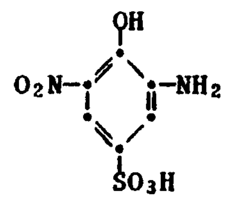 | 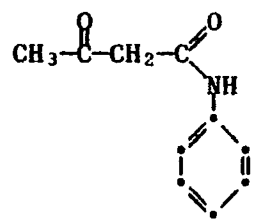 | Co | gelb |
| 17. | 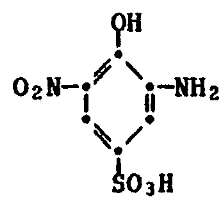 | 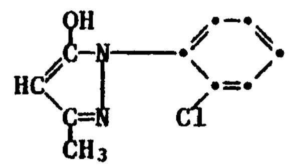 | Cr | rot |
| 18. | 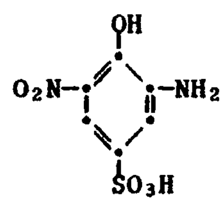 | 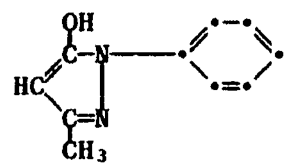 | Co | rotbraun |

Tabelle I (Fortsetzung)

| Beispiel | Amin | Kupplungskomponente | Metall | Nuance |
|---|---|---|---|---|
| 19. | 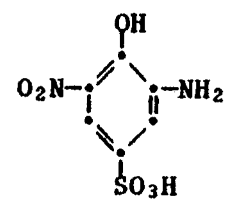 | 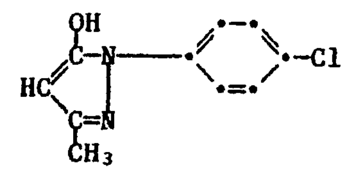 | Co | rotbraun |
| 20. | 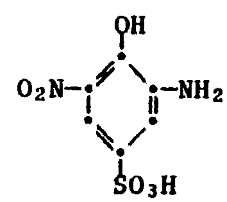 | 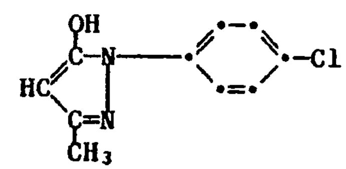 | Cr | rot |
| 21. | 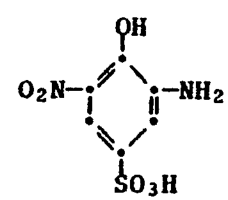 | 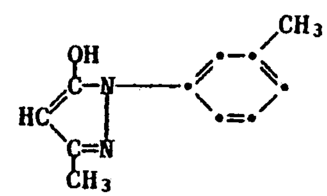 | Cr | rot |

Tabelle I (Fortsetzung)

| Beispiel | Amin | Kupplungskomponente | Metall | Nuance |
|---|---|---|---|---|
| 22. | 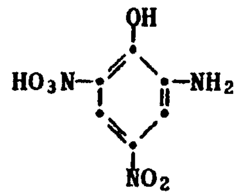 | 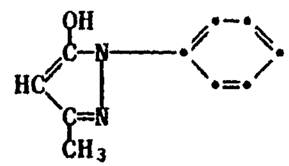 | Co | gelbbraun |
| 23. | 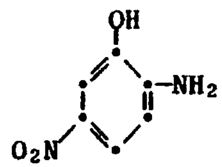 | 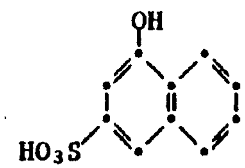 | Cr | blau |
| 24. | 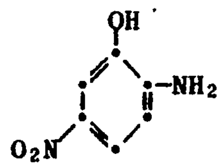 | 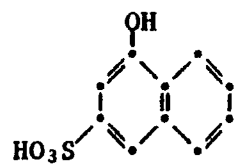 | Co | violett |

Tabelle I (Fortsetzung)

| Beispiel | Amin | Kupplungskomponente | Metall | Nuance |
|---|---|---|---|---|
| 25. | 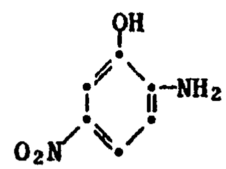 | 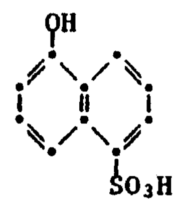 | Cr | blau |
| 26. | 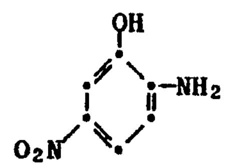 | 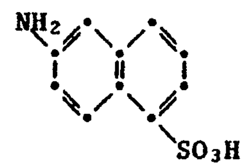 | Cr | grau |
| 27. | 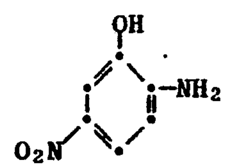 | 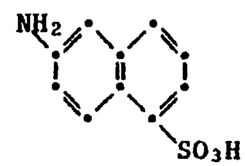 | Co | grau |

Tabelle I (Fortsetzung)

| Beispiel | Amin | Kupplungskomponente | Metall | Nuance |
|---|---|---|---|---|
| 28. | 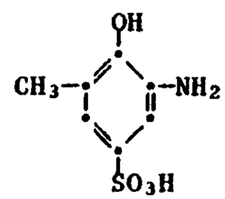 | 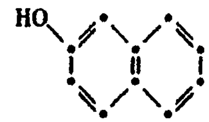 | Cr | violett |
| 29. | 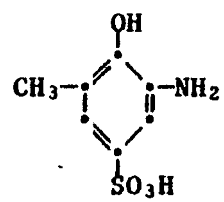 | 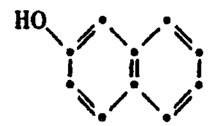 | Co | bordeaux |
| 30. | 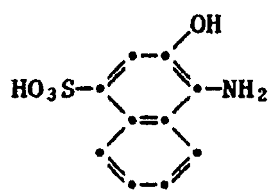 | 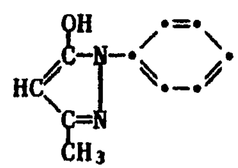 | Cr | bordeaux |

Tabelle I (Fortsetzung)

| Beispiel | Amin | Kupplungskomponente | Metall | Nuance |
|---|---|---|---|---|
| 31. | 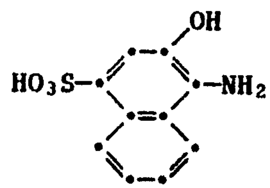 | 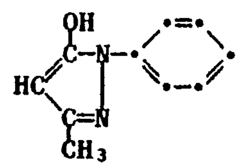 | Co | orange |
| 32. | 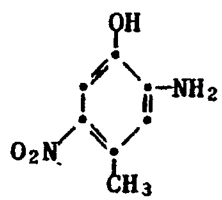 | 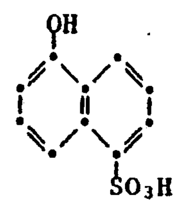 | Cr | blau |
| 33. | 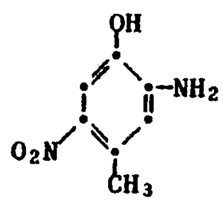 | 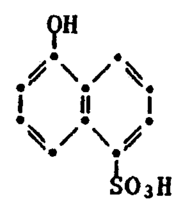 | Co | violett |

Tabelle I (Fortsetzung)

| Beispiel | Amin | Kupplungskomponente | Metall | Nuance |
|---|---|---|---|---|
| 34. | 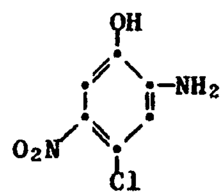 | 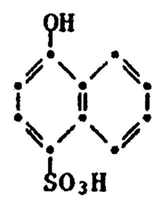 | Cr | blau |
| 35. | 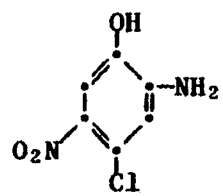 | 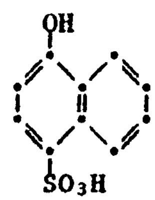 | Co | violett |
| 36. | 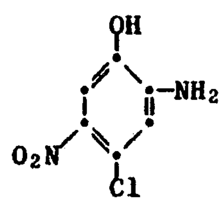 | 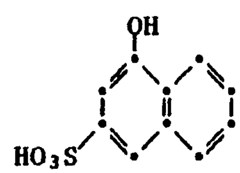 | Cr | blau |

Tabelle I (Fortsetzung)

| Beispiel | Amin | Kupplungskomponente | Metall | Nuance |
|---|---|---|---|---|
| 37. | 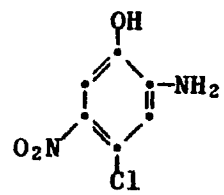 | 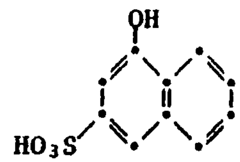 | Co | violett |
| 38. | 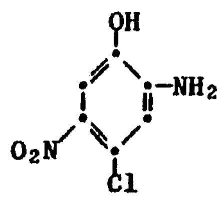 | 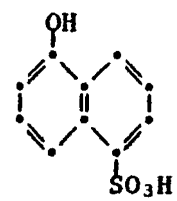 | Cr | blau |
| 39. | 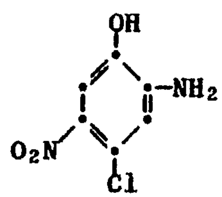 | 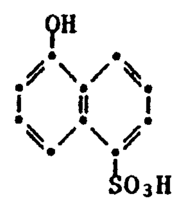 | Co | violett |

Tabelle I (Fortsetzung)

| Beispiel | Amin | Kupplungskomponente | Metall | Nuance |
|---|---|---|---|---|
| 40. | 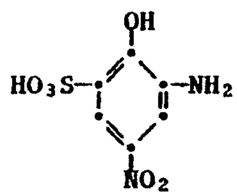 | 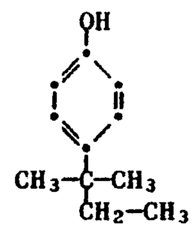 | Cr | braun |
| 41. | 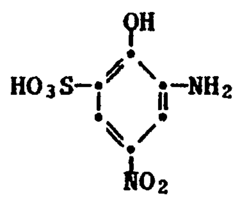 | 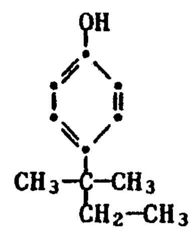 | Co | braun |
| 42. | 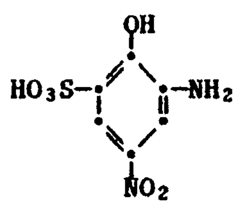 | 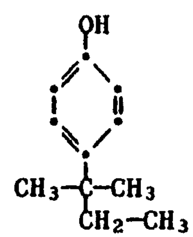 | Fe | braun |

**Tabelle I (Fortsetzung)**

| Beispiel | Amin | Kupplungskomponente | Metall | Nuance |
|---|---|---|---|---|
| 43. | 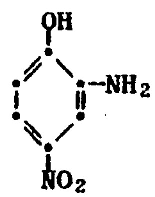 | 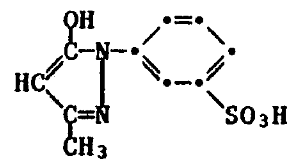 | Cr | orange |
| 44. | 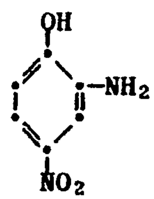 | 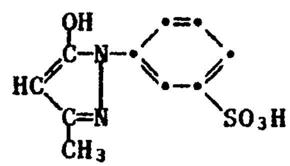 | Co | gelb |
| 45. | 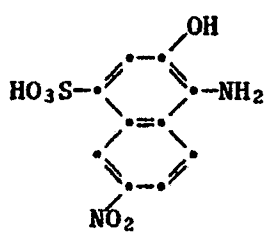 | 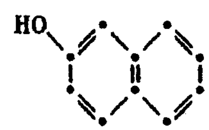 | Cr | schwarz |

Tabelle I (Fortsetzung)

| Beispiel | Amin | Kupplungskomponente | Metall | Nuance |
|---|---|---|---|---|
| 46. | 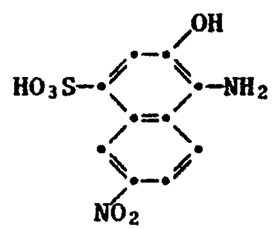 | 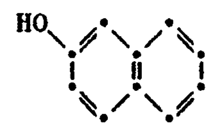 | Co | korinth |
| 47. | 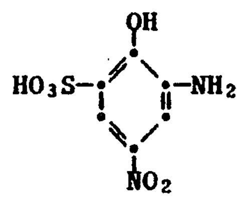 | 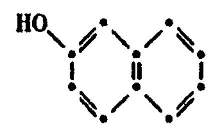 | Co | bordeaux |
| 48. | 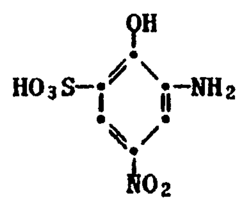 | 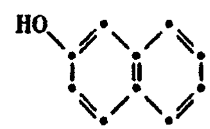 | Cr | grau |

Tabelle I (Fortsetzung)

| Beispiel | Amin | Kupplungskomponente | Metall | Nuance |
|---|---|---|---|---|
| 49. | 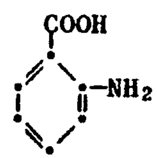 | 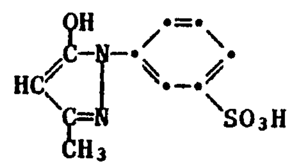 | Cr | gelb |
| 50. | 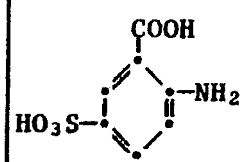 | 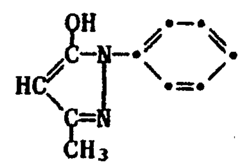 | Cr | gelb |
| 51. | 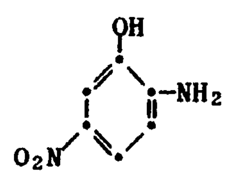 | 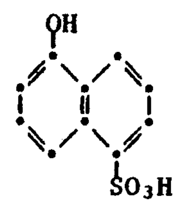 | Co | violett |

Tabelle I (Fortsetzung)

| Beispiel | Amin | Kupplungskomponente | Metall | Nuance |
|---|---|---|---|---|
| 52. | 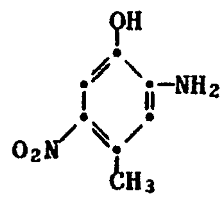 | 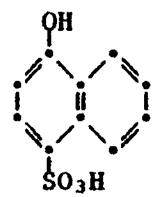 | Cr | blau |
| 53. | 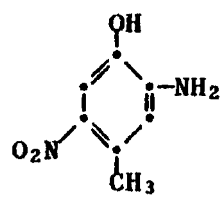 | 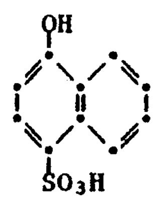 | Co | violett |
| 54. | 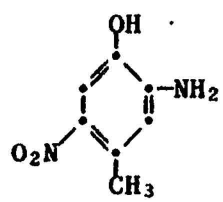 | 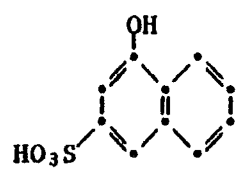 | Cr | blau |

Tabelle I (Fortsetzung)

| Beispiel | Amin | Kupplungskomponente | Metall | Nuance |
|---|---|---|---|---|
| 55. | 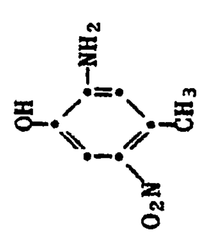 | 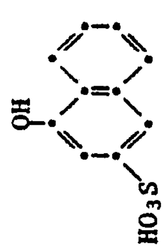 | Co | violett |

## Ansprüche

1. Verfahren zur Herstellung von 1:2-Chrom-, 1:2-Kobalt-, 1:2-Nickel-oder 1:2-Eisenkomplexazofarbstoffen durch Diazotierung, Kupplung und Metallisierung ohne Zwischenisolierung des Kupplungsproduktes, welches dadurch gekennzeichnet ist, dass man in wässriger Lösung ohne Zusatz eines organischen

Lösungsmittels mindestens ein Amin der Benzol- oder Naphthalinreihe diazotiert und auf mindestens eine Kupplungskomponente der Benzol- oder Naphthalinreihe oder der heterocyclischen Reihe kuppelt, wobei der intermediär gebildete Azofarbstoff zur Komplexierung geeignete Gruppen enthält, wobei die Diazotierung oder die Kupplung in Gegenwart einer das Chrom-, Kobalt-, Nickel- oder Eisenatom abgebenden Verbindung erfolgt und wobei man die Summe der Kupplungskomponenten bzw. die Summe der Diazokomponente zum Metallisierungsmittel im molaren Verhältnis von 1,2:1,0 bis 2,4:1,0 verwendet.

2. Verfahren gemäss Anspruch 1, dadurch gekennzeichnet, dass man in wässriger Lösung mindestens ein Amin der Benzol- oder Naphthalinreihe, welches eine zur Komplexbildung geeignete Gruppe enthält, diazotiert und auf mindestens eine Kupplungskomponente der Benzol-oder Naphthalinreihe oder der heterocyclischen Reihe, welche eine zur Komplexbildung geeignete Gruppe enthält, kuppelt, wobei die Diazotierung oder die Kupplung in Gegenwart einer das Chrom-, Kobalt-, Nickel- oder Eisenatom abgebenden Verbindung erfolgt.

3. Verfahren gemäss einem der Ansprüche 1 und 2, dadurch gekennzeichnet, dass die Diazotierung oder die Kupplung in Gegenwart einer das Chrom-, Kobalt- oder Nickelatom abgebenden Verbindung erfolgt.

4. Verfahren gemäss einem der Ansprüche 1 und 2, dadurch gekennzeichnet, dass die wässrige Lösung der Kupplungskomponente die Chrom-, Kobalt-, Eisen- oder Nickel-abgebende Verbindung enthält.

5. Verfahren gemäss Anspruch 3, dadurch gekennzeichnet, dass man eine das Chrom- oder Kobaltatom abgebende Verbindung verwendet.

6. Verfahren gemäss einem der Ansprüche 1 bis 5, dadurch gekennzeichnet, dass die Kupplung bei einer Temperatur von 40 bis 100 ° C, vorzugsweise 55 bis 85 ° C und insbesondere 70 bis 80 ° C erfolgt.

7. Verfahren gemäss einem der Ansprüche 1 bis 5, dadurch gekennzeichnet, dass die Metallisierung bei einer Temperatur von 40 bis 160 ° C, vorzugsweise 60 bis 160 ° C erfolgt.

8. Verfahren gemäss einem der Ansprüche 1 bis 5 und 7, dadurch gekennzeichnet, dass die Metallisierung unter einem Druck von 1 bis 6 insbesondere 2 bis 4 bar erfolgt.

9. Verfahren gemäss Anspruch zur Herstellung symmetrischer 1:2-Metallkomplexazofarbstoffe der Formel

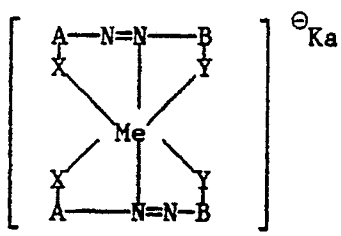

(1),

worin A je der identische Rest einer Diazokomponente der Benzol-oder Naphthalinreihe, B je der identische Rest einer Kupplungskomponente der Benzol- oder Naphthalinreihe oder der heterocyclischen Reihe, X je der -O- oder -COO- Rest, Y je der -O- oder -N(R)-Rest ist, wobei R Wasserstoff, $C_{1-4}$-Alkyl oder Phenyl ist, Me Chrom, Kobalt oder Eisen, insbesondere Chrom oder Kobalt und Ka ein Kation bedeutet, und X und Y in Nachbarstellung zur Azogruppe an A und B gebunden sind, dadurch gekennzeichnet, dass man eine Amin der Formel

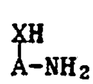

(2)

diazotiert und auf eine Kupplungskomponente der Formel

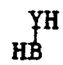

(3)

deren Lösung die das Chrom-, Kobalt- oder Eisenatom, insbesondere das Chrom- oder Kobaltatom abgebende Verbindung enthält, kuppelt, wobei A, B, X und Y die Formel (1) angegebenen Bedeutungen haben.

**10.** Verfahren gemäss Anspruch 2 zur Herstellung gemischter 1:2-Metallkomplexazofarbstoffe, dadurch gekennzeichnet, dass man mindestens ein Amin der Formel

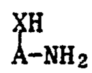

(2)

worin A der Rest einer Diazokomponente der Benzol- oder Naphthalinreihe ist und X der -O- oder -COO- Rest, diazotiert und auf mindestens eine Kupplungskomponente der Formel

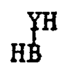

(3),

worin B der Rest einer Kupplungskomponente der Benzol- oder Naphthalinreihe oder der heterocyclischen Reihe und Y je der -O- oder -N(R)-Rest ist, wobei R Wasserstoff, $C_{1-4}$-Alkyl oder Phenyl bedeutet, kuppelt, wobei die Lösung der Kupplungskomponente(n) eine Chrom-, Kobalt- oder Eisen-, insbesondere Chrom- oder Kobalt-abgebende Verbindung enthält, mit der Bedingung, dass mindestens zwei Amine der Formel (2) oder mindestens zwei Kupplungskomponenten der Formel (3) versendet werden, und X in Nachbarstellung zu der Aminogruppe an den Rest A und Y in Nachbarstellung zu der Kupplungsstelle an den Rest B gebunden ist.

**11.** Verfahren gemäss einem der Ansprüche 9 und 10, dadurch gekennzeichnet, dass man ein Amin der Formel (2) verwendet, worin A ein Benzol - oder Naphthalinrest ist, der substituiert sein kann durch $C_{1-4}$-Alkyl, $C_{1-4}$-Alkoxy, Halogen, Nitro, Sulfamoyl, N-$C_{1-4}$-Alkylsulfamoyl, N-$C_{1-4}$-Alkoxy-$C_{1-4}$-alkylsulfamoyl, Phenylaminosulfonyl, Carboxyphenylaminosulfonyl, $C_{1-4}$-Alkylsulfonyl, $C_{2-5}$-Alkanoylamino, Cyan, Trifluormethyl und Sulfo.

**12.** Verfahren gemäss einem der Ansprüche 9 und 10, dadurch gekennzeichnet, dass man als Kupplungskomponente der Formel (3) oder als Gemisch von zwei Kupplungskomponenten gemäss Formel (3) Acetoacetanilid, 1-Phenyl-3-methyl-5-pyrazolon, 1- oder 2-Naphthol oder 2-Naphthylamin verwendet, die substituiert sein können durch Halogen, $C_{1-4}$-Alkyl, Cyan, Sulfamoyl, $C_{2-5}$-Alkanoylamino, $C_{2-5}$-Alkoxycarbonylamino, $C_{1-4}$-Alkylsulfonylamino, $C_{1-4}$-Alkoxy, Sulfo, Hydroxy, Phenyl oder $-SO_2-CH_2-O-$.

**13.** Verfahren gemäss einem der Ansprüche 1 und 5 bis 8 zur Herstellung von symmetrischen 1:2-Chrom- oder 1:2-Kobaltkomplexazofarbstoffen, dadurch gekennzeichnet, dass man Anilinsulfonsäure diazotiert und auf 8-Hydroxychinolin kuppelt, wobei die Lösung der Kupplungskomponente eine das Chrom- oder Kobaltatom abgebende Verbindung enthält.

**14.** Verfahren gemäss einem der Ansprüche 1 bis 12, dadurch gekennzeichnet, dass man Amin und Kupplungskomponente bzw. die Summe aller Amine und die Summe aller Kupplungskomponenten im molaren Verhältnis von 0,9:1,0 bis 1,1:1,0 verwendet.

**15.** Verfahren gemäss einem der Ansprüche 1 bis 14, dadurch gekennzeichnet, dass man einen Ueberschuss von 1 bis 20 Gewichtsprozent an metallabgebender Verbindung verwendet.

## Claims

1. A process for the preparation of a 1:2 chromium, 1:2 cobalt, 1:2 nickel or 1:2 iron complex azo dye by diazotisation, coupling and metallising, without intermediate isolation of the coupling product, which process comprises diazotising at least one amine of the benzene or naphthalene series in aqueous solution without the addition of an organic solvent and coupling the product to at least one coupling component of the benzene or naphthalene series or of the heterocyclic series, such that the azo dye obtained as intermediate contains groups suitable for complex formation, the diazotisation or coupling being carried out in the presence of a compound which donates the chromium, cobalt, nickel or iron atom, and the sum of the coupling components or the sum of the diazo components being used in the molar ratio of from 1.2:1.0 to 2.4:1.0 to the metallising agent.

2. A process according to claim 1, which comprises diazotising, in aqueous solution, at least one amine of the benzene or naphthalene series which contains a group suitable for complex formation, and coupling the product to at least one coupling component of the benzene or naphthalene series or of the heterocyclic series, which coupling component contains a group suitable for complex formation, the diazotisation or the coupling being carried out in the presence of a compound which donates the chromium, cobalt, nickel or iron atom.

3. A process according to either claim 1 or claim 2, wherein the diazotisation or the coupling is carried out in the presence of a compound which donates the chromium, cobalt or nickel atom.

4. A process according to either claim 1 or claim 2, wherein the aqueous solution of the coupling component contains the compound which donates chromium, cobalt, iron or nickel.

5. A process according to claim 3, wherein a compound which donates the chromium or cobalt atom is used.

6. A process according to any of claims 1 to 5, wherein the coupling is carried out at a temperature from 40 to 100 °C, preferably from 55 to 85 °C and, in particular, from 70 to 80 °C.

7. A process according to any one of claims 1 to 5, wherein the metallisation is carried out at a temperature from 40 to 160 °C, preferably from 60 to 160 °C.

8. A process according to any one of claims 1 to 5 or 7, wherein the metallisation is carried out under a pressure of 1 to 6 bar in particular 2 to 4 bar.

9. A process according to claim 2 for the preparation of a symmetrical 1:2 metal complex azo dye of formula

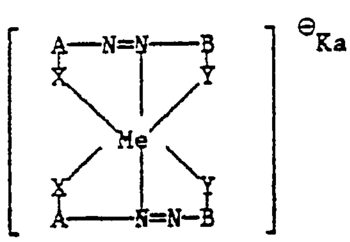

(1)

in which each A is the identical radical of a diazo component of the benzene or naphthalene series, each B is the identical radical of a coupling component of the benzene or naphthalene series or of the heterocyclic series, each X is the -O- or -COO- radical, each Y is the -O- or -N(R)- radical, where R is hydrogen, $C_1$-$C_4$alkylor phenyl, Me is chromium, cobalt or iron, in particular chromium or cobalt, and Ka is a cation, and X and Y are attached to A and B adjacent to the azo group, which process comprises diazotising an amine of formula

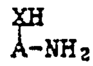

(2)

and coupling the product to a coupling component of formula

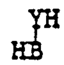

(3)

the solution of which coupling component contains the compound which donates the chromium, cobalt or iron atom in particular the chromium or cobalt atom, where A, B, X and Y are as defined for formula (1).

**10.** A process according to claim 2 for the preparation of a mixed 1:2 metal complex azo dye, which comprises diazotising at least one amine of formula

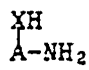

(2)

in which A is the radical of a diazo component of the benzene or naphthalene series and X is the -O- or -COO- radical, and coupling the product to at least one coupling component of formula

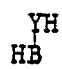

(3)

in which B is the radical of a coupling component of the benzene or naphthalene series or of the heterocyclic series, and Y is the -O- or
-N(R)- radical, where R is hydrogen, $C_1$-$C_4$alkyl or phenyl, the solution of which coupling component or components contains a compound which donates chromium, cobalt or iron in particular chromium or cobalt, with the proviso that at least two amines of formula (2) or at least two coupling components of formula (3) are used and X is attached to the radical A adjacent to the amino group and Y is attached to the radical B adjacent to the coupling site.

**11.** A process according to either claim 9 or claim 10, which comprises the use of an amine of formula (2), in which A is a benzene or naphthalene radical which may be substituted by $C_1$-$C_4$alkyl, $C_1$-$C_4$alkoxy, halogen, nitro, sulfamoyl, N-$C_1$-$C_4$alkylsulfamoyl, N-$C_1$-$C_4$alkoxy-$C_1$-$C_4$alkylsulfamoyl, phenylaminosulfonyl, carboxyphenylaminosulfonyl, $C_1$-$C_4$alkylsulfonyl, $C_2$-$C_5$alkanoylamino, cyano, trifluoromethyl and sulfo.

**12.** A process according to either claim 9 or claim 10, which comprises using as coupling component of formula (3), or as mixture of two coupling components of formula (3), acetoacetanilide, 1-phenyl-3-methyl-5-pyrazolone, 1- or 2-naphthol or 2-naphthylamine, which may be substituted by halogen, $C_1$-$C_4$alkyl, cyano, sulfamoyl, $C_2$-$C_5$alkanoylamino, $C_2$-$C_5$alkoxycarbamoyl, $C_1$-$C_4$alkylsulfonylamino, $C_1$-$C_4$alkoxy, sulfo, hydroxyl, phenyl or - $SO_2$-$CH_2$-O-.

**13.** A process according to any one of claims 1 or 5 to 8 for the preparation of a symmetrical 1:2 chromium or 1:2 cobalt complex azo dye, which comprises diazotising anilinesulfonic acid and coupling the product to 8-hydroxyquinoline, the solution of the coupling component containing a compound which donates the chromium or cobalt atom.

**14.** A process according to any one of claims 1 to 12, wherein amine and coupling component, or the sum of all amines and the sum of all coupling components, are used in the molar ratio of from 0.9:1.0 to

1.1:1.0.

15. A process according to any one of claims 1 to 14, wherein the compound which donates the metal is used in an excess of from 1 to 20 per cent by weight.

## Revendications

1. Procédé de préparation de complexes 1:2 de colorants azoïques et de chrome, de cobalt, de nickel ou de fer, par diazotation, copulation et métallation, sans isolement intermédiaire du produit de copulation, lequel procédé est caractérisé en ce que l'on effectue en solution aqueuse, sans ajouter de solvant organique, la diazotation d'au moins une amine de la série du benzène ou du naphtalène, et on la fait copuler sur au moins un copulant de la série du benzène ou du naphtalène ou de la série hétérocyclique, le colorant azoïque formé comme intermédiaire comportant des groupes appropriés pour la formation de complexes, la diazotation ou la copulation étant effectuée en présence d'un composé donneur d'atomes de chrome, de cobalt, de nickel ou de fer, et le total des copulants ou le total des composants diazo étant utilisé en un rapport molaire de 1,2:1,0 à 2,4:1,0 par rapport à l'agent de métallation.

2. Procédé conforme à la revendication 1, caractérisé en ce que l'on effectue en solution aqueuse la diazotation d'au moins une amine de la série du benzène ou du naphtalène, qui comporte un groupe approprié pour la formation de complexes, et qu'on la fait copuler sur au moins un copulant de la série du benzène ou du naphtalène ou de la série hétérocyclique, qui comporte un groupe approprié pour la formation de complexes, cette diazotation ou cette copulation étant réalisée en présence d'un composé donneur d'atomes de chrome, de cobalt, de nickel ou de fer.

3. Procédé conforme à l'une des revendications 1 et 2, caractérisé en ce que la diazotation ou la copulation est réalisée en présence d'un composé donneur d'atomes de chrome, de cobalt ou de nickel.

4. Procédé conforme à l'une des revendications 1 et 2, caractérisé en ce que la solution aqueuse du copulant contient le composé donneur d'atomes de chrome, de cobalt, de fer ou de nickel.

5. Procédé conforme à la revendication 3, caractérisé en ce que l'on utilise un composé donneur d'atomes de chrome ou de cobalt.

6. Procédé conforme à l'une des revendications 1 à 5, caractérisé en ce que l'on effectue la copulation à une température de 40 à 100 °C, de préférence de 55 à 85 °C, et en particulier de 70 à 80 °C.

7. Procédé conforme à l'une des revendications 1 à 5, caractérisé en ce que l'on effectue la métallation à une température de 40 à 160 °C, de préférence de 60 à 160 °C.

8. Procédé conforme à l'une des revendications 1 à 5 et 7, caractérisé en ce que l'on effectue la métallation sous une pression de 1 à 6 bars, et en particulier de 2 à 4 bars.

9. Procédé conforme à la revendication 2, pour la préparation de complexes métalliques 1:2 symétriques de colorants azoïques, de formule

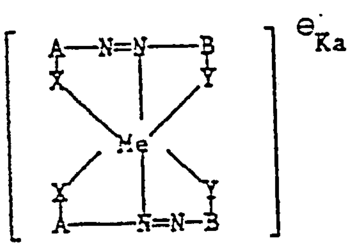

(1)

dans laquelle chacun des A représente le même reste d'un composant diazo de la série du benzène ou du naphtalène, chacun des B représente le même reste d'un copulant de la série du benzène ou du naphtalène ou de la série hétérocyclique, chacun des X représente -O- ou -COO-, chacun des Y représente -O- ou -N(R)-, R représentant un atome d'hydrogène ou un groupe alkyle en $C_{1-4}$ ou phényle, Me représente un atome de chrome, de cobalt ou de fer, en particulier un atome de chrome ou de cobalt, et Ka représente un cation, X et Y étant liés à A et B en position voisine du groupe azo, caractérisé en ce que l'on diazote une amine de formule

$$HX{-}A{-}NH_2 \qquad (2)$$

et qu'on la copule sur un copulant de formule

$$HY{-}BH \qquad (3)$$

dont la solution contient le composé donneur d'atomes de chrome, de cobalt ou de fer, en particulier de chrome ou de cobalt, A, B, X et Y ayant dans les formules (2) et (3) les significations indiquées à propos de la formule (1).

**10.** Procédé conforme à la revendication 2, pour la préparation de mélanges de complexes métalliques 1:2 de colorants azoïques, caractérisé en ce que l'on effectue la diazotation d'au moins une amine de formule

$$XH{-}A{-}NH_2 \qquad (2)$$

dans laquelle A représente le résidu d'un composant diazo de la série du benzène ou du naphtalène et X représente -O- ou -COO-,
et qu'on fait copuler le diazo obtenu sur au moins un copulant de formule

$$HB{-}YH \qquad (3)$$

dans laquelle B représente le résidu d'un copulant de la série du benzène ou du naphtalène ou de la série hétérocyclique, et Y représente -O- ou -N(R)-, R représentant un atome d'hydrogène ou un groupe alkyle en $C_{1-4}$ ou phényle,
la solution du ou des copulants contenant un composé donneur d'atomes de chrome, de cobalt ou de fer, en particulier de chrome ou de cobalt, avec la condition que soient utilisés au moins deux amines de formule (II) ou au moins deux copulants de formule (III), X étant lié au résidu A en position voisine du groupe amino et Y étant lié au résidu B en position voisine de la position de copulation.

**11.** Procédé conforme à l'une des revendications 9 et 10, caractérisé en ce que l'on utilise une amine de formule (II), dans laquelle A représente un résidu de benzène ou de naphtalène, qui peut être substitué par alkyle en $C_{1-4}$, alcoxy en $C_{1-4}$, halogène, nitro, sulfamoyle, N-(alkyl en $C_{1-4}$)-sulfamoyle, N-(alcoxy en $C_{1-4}$-alkyl en $C_{1-4}$)-sulfamoyle, phénylaminosulfonyle, carboxyphénylaminosulfonyle, alkylsulfonyle en $C_{1-4}$, alcanoylamino en $C_{2-5}$, cyano, trifluorométhyle et sulfo.

**12.** Procédé conforme à l'une des revendications 9 et 10, caractérisé en ce que l'on utilise, comme copulant de formule (III) ou comme mélange de deux copulants de formule (III), l'acétoacétanilide, la 1-phényl-3-méthyl-5-pyrazolone, le 1-naphtol, le 2-naphtol ou la 2-naphtylamine, ces composés pouvant être substitués par halogène, alkyle en $C_{1-4}$, cyano, sulfamoyle, alcanoylamino en $C_{2-5}$, alcoxycarbonylamino en $C_{2-5}$, alkylsulfonylamino en $C_{1-4}$, alcoxy en $C_{1-4}$, sulfo, hydroxy, phényle ou $-SO_2-CH_2-O-$.

**13.** Procédé conforme à l'une des revendications 1 et 5 à 8, pour la préparation de complexes symétriques 1:2 du chrome ou du cobalt et de colorants azoïques, caractérisé en ce que l'on diazote un acide anilinesulfonique et qu'on le fait copuler sur de la 8-hydroxyquinoléine, la solution du copulant

contenant un composé donneur d'atomes de chrome ou de cobalt.

14. Procédé conforme à l'une des revendications 1 à 12, caractérisé en ce que l'on utilise l'amine et le copulant, ou le total de toutes les amines et le total de tous les copulants, en un rapport molaire de 0,9:1,0 à 1,1:1,0.

15. Procédé conforme à l'une des revendications 1 à 14, caractérisé en ce que l'on utilise un excès de 1 à 20 % en poids du composé donneur de métal.